# EUROPÄISCHE PATENTSCHRIFT

(11) **EP 1 420 994 B1**
(45) Veröffentlichungstag und Bekanntmachung des Hinweises auf die Patenterteilung: **10.05.2006**
(21) Anmeldenummer: 02766918.3
(22) Anmeldetag: 27.08.2002
(51) Int. Cl.: B62D 1/184

(54) **FÜHRUNGSELEMENT FÜR EINE LENKWELLENFIXIEREINRICHTUNG**
GUIDING ELEMENT FOR A STEERING SHAFT FIXING DEVICE
ELEMENT DE GUIDAGE DESTINE A UN DISPOSITIF DE FIXATION D'UN ARBRE DE DIRECTION

(30) Priorität: 28.08.2001 AT 136201
(43) Veröffentlichungstag der Anmeldung: 26.05.2004
(73) Patentinhaber: ThyssenKrupp Presta AG, 9492 Eschen (LI)
(72) Erfinder: HEIML, Roland, A-4870 Vöcklamarkt (AT)
(74) Vertreter: Secklehner, Günter
(86) Internationale Anmeldenummer: PCT/AT2002/000253
(87) Internationale Veröffentlichungsnummer: WO 2003/018383

(56) Entgegenhaltungen:
- GB-A- 2 295 219

## Beschreibung

Die Erfindung betrifft ein Führungselement einer Fixiereinrichtung und eine Verstelleinrichtung für eine Lenkwelle, wie in den Oberbegriffen der Ansprüche 1 und 53 beschrieben und zum Beispiel aus der GB 2 295 219 A bekannt, sowie die Verwendung des Führungselementes entsprechend dem Anspruch 52.

Aus der GB 2 295 219 A ist eine Verstelleinrichtung für eine Lenkwelle eines Kraftfahrzeuges bekannt, die ein die Lenkwelle lagerndes Mantelrohr und eine ortsfest angeordnete Halterung umfasst, wobei die Lenkwelle in Richtung ihrer Längsachse verschiebbar und in einer dazu radialen Richtung verschwenkbar angeordnet ist und das Mantelrohr und die Halterung in ihrer eingestellten Relativlage über zumindest eine Fixiereinrichtung zueinander fixierbar gehalten sind. Das Mantelrohr und die Halterung weisen jeweils paarweise einander gegenüberliegende und senkrecht zueinander verlaufende Ausnehmungen auf, innerhalb welchen Führungen aus Kunststoff eingesetzt sind. Die paarweise und parallel gegenüberliegenden Führungen sind mit Längsschlitzen versehen, entlang deren Führungselemente zwischen begrenzenden Anschlagflächen verschiebbar gelagert sind. Die Anschlagflächen sind durch die Enden des Längsschlitzes in den Führungen gebildet. Jedes Führungselement weist einen länglichen Grundkörper auf, von welchem Seitenflächen als Seitenführungsflächen zur bereichsweisen Anlage an Führungsflächen des Längsschlitzes bestimmt sind. Der Grundkörper ist mit einer Aussparung zur Aufnahme eines Spannelementes und an seinen voneinander abgewandten Endbereichen jeweils mit einem elastisch verformbaren, rückstellbaren Anschlag- bzw. Dämpfungselement versehen.

Es sind bereits aus dem Stand der Technik Führungselemente für Fixiereinrichtungen einer Lenkwelle bekannt, die in eine Ausnehmung in einem Mantelrohr und/oder einer Halterung bewegungsfest eingesetzt sind und die durch einen, zwei parallel zueinander verlaufende Längsseitenränder und zwei quer zu diesen verlaufende Querseitenränder aufweisenden Rahmenteil, gebildet sind. Eine von den Längs- und Breitseitenrändern umgrenzte, schlitzartige Öffnung im Führungselement ist von einem innerhalb und entlang dieser verschiebbar angeordneten Spannelement, insbesondere Schraubenbolzen, durchragt. Ein in zur Längsachse der Lenkwelle paralleler und/oder senkrechter Richtung vorgesehener Verstellweg der Lenkwelle ist durch gegenüberliegende, einander zugewandte Stirnseitenflächen der Öffnung begrenzt. Die während einer Längen- und/oder Neigungsverstellung der Lenkwelle durch kräftiges Anschlagen des Spannelementes an eine der Endlagen hervorgerufene kinetische Energie wird zumindest zum Teil durch im Bereich der Stirnseitenflächen angeordnete Anschlag- bzw. Dämpfungselemente absorbiert. Ein derartiges Anschlag- bzw. Dämpfungselement ist beispielsweise durch einen quer zur Längsachse der Öffnung ausgerichteten, elastisch nachgiebigen, reversiblen Kunststoffteil gebildet, die von an den Stirnseitenflächen angeordneten Halteteilen ortsfest gehalten sind. Derartige rahmenformig ausgebildete Führungselemente sind in die hierfür, um die Baugröße der Führungselemente vorgesehenen größer zu dimensionierenden Ausnehmungen in den Teilen, z.B. Halterung, Mantelrohr, anzuordnen. Diese Teile sind mit größeren Wandstärken oder mit zusätzlichen Verstärkungselementen auszubilden, um die gegebenenfalls eintretenden hohen Anschlagenergien absorbieren zu können. Die im Automobilbereich ständig steigenden Sicherheitsanforderungen, vor allem im Bereich der Lenkungen, erfordern entsprechend robust aufgebaute Lenkwellenverstelleinheiten, wonach die größer auszubildenden Ausnehmungen in den Teilen für die Aufnahme des von dem Spannelement durchragten Führungselementes eine Schwächung des wirksamen, kraftübertragenden bzw. momentenübertragenden Querschnittes bewirken, so daß sich der vorgenannte Nachteil, beispielsweise nur durch größere Wandstärken vermeiden läßt. Dies wirkt sich vor allem auf das Gesamtgewicht und die Baugröße sowie die Herstellkosten von derartigen Lenkwellenverstelleinheiten nachteilig aus. Weiters sind diese rahmenförmigen Führungselemente durch die häufigen Stellvorgänge und der Relativverschiebung des Spannelementes gegenüber dem Führungselement innerhalb der Öffnung, einem erhöhten reibungsbedingten Verschleiß ausgesetzt, was über längere Einsatzdauer zum Bruch des Fühnmgselementes und zu einer Störung der erforderlichen Dämpfungswirkung sowie zu einer Störung des Betriebsverhalten der Lenkwellenverstelleinheit führt Außerdem sind diese Führungselemente ausschließlich für eine mechanische Funktion, nämlich der Endlagendämpfung während eines Verstellvorganges der Lenkwelle, geeignet.

Weiters sind aus dem Stand der Technik Verstelleinrichtangen für eine Lenkwelle bekannt, die gegenüber einer in einem Fahrzeug ortsfest angeordneten Halterung in Richtung der Längsachse der Lenkwelle verschiebbar und/oder in einer dazu radialen Richtung verschwenkbar angeordnet ist, wobei ein Verstellweg durch eine in dem Mantelrohr und/oder der Halterung angeordnete und von einem Spannelement der Fixiereinrichtung durchragten Ausnehmung begrenzt ist. Ein quer zur Längsachse der Lenkwelle verlaufendes Spannelement weist in Richtung seiner Längserstreckung mittels eines Betätigungselementes, z.B. Hebels, relativ zueinander verstellbare Fixiermittel auf, die jeweils mit einem Verstellelement und Rückstellelement ausgestattet sind. Gegenüberliegende und jeweils den Endlagen der Ausnehmung zugeordnete Dämpfungselemente ermöglichen das Absorbieren von kinetischer Energie, die während eines kraftvollen Anprallens des Fixiermittels an eine der Endlagen hervorgerufen wird. Derartige energieabsorbierende Dämpfungselemente sind als eigener Bauteil in für diese vorgesehene Aufnahmevorrichtungen, wie beispielsweise Befestigungslaschen, anzuordnen. Nachteilig dabei ist, daß durch den zusätzlichen Bauteil, der durch das Dämpfungselement gebildet ist, ein erhöhter Montageaufwand entsteht.

Der Erfindung liegt nunmehr die Aufgabe zugrunde, ein, mehrere Funktionen aufweisendes Führungselement für eine Fixiereinrichtung einer Lenkwelle und eine derartige, verbesserte Fixiereinrichtung selbst zu schaffen, das eine Endlagendämpfung durch Absorption von kinetischer Energie während der Verstellung der Lenkwelle gegen ihre maximale Endlage und eine Vereinfachung der Produktion der Fixiereinrichtung ermöglicht.

Die Aufgabe der Erfindung wird durch die im Anspruch 1 beschriebenen kennzeichnenden Merkmale gelöst. Die überraschenden Vorteile dabei sind, daß durch die unmittelbare Anordnung der elastisch verformbaren, rückstellbaren Anschlag- bzw. Dämpfungselemente am Fühnmgselement die Anzahl der Einzelbauteile und die Baugröße erheblich reduziert sowie die Störanfälligkeit gegen fehlerhaftes Betriebsverhalten, wie sie beispielsweise bei einer Vielzahl von miteinander verbundenen Einzelbauteilen einer Lenkwellenverstelleinheit auftreten kann, vermieden wird. Durch die Anordnung zumindest eines Aufnahmeelementes am Führungselement ist eine Vormontage von Teilen der Fixiereinrichtung möglich, so daß die weiteren Montageschritte in einen zumindest teilweise automatisierten Betrieb zur Herstellung einer Lenkwellenverstelleinheit wesentlich vereinfacht werden kann und wird die Herstellzeit für die Lenkwellenverstelleinheit wesentlich reduziert.

Durch die Ausbildung nach Anspruch 2 ist ein einfacher Aufbau und eine einfache Fertigung, beispielsweise im Spritzgußverfahren, des Führungselementes möglich. Die einstückige Ausbildung des Führungselementes verringert fertigungsbedingte Toleranzabweichungen und trägt zu Reduzierung der Gesamtanzahl der Einzelbauteile einer Fixiereinrichtung bei.

Die Weiterbildung nach Anspruch 3 ermöglicht die Variation eine unterschiedliche Kombinationen von Grundkörpern und Aufnahmeelementen, womit eine hohe Flexibilität in bezug auf die Anpassung an verschiedene Typen von Fixiereinrichtungen geschaffen ist.

Durch die Fortbildungen nach den Ansprüchen 4 bis 8 ist eine verdrehgesicherte Aufnahme und gegebenenfalls eine Selbstzentrierung des Spannelementes gegenüber dem Führungselement möglich.

In den Ausführungsvarianten gemäß den Ansprüchen 9 bis 13 ist eine Führung des Führungselementes durch die in die Ausnehmung des Teiles vorragende Führungsvorrichtung möglich, ohne hierfür zusätzliche eigenständige konstruktive Führungsmittel vorsehen zu müssen.

Gemäß den Ausführungen nach den Ansprüchen 14 und 15 kann die Bauhöhe des Führungselementes verringert werden, so daß auch die Fixiereinrichtung in ihrer Baugröße kleiner ausgebildet werden kann.

Die Weiterbildungen nach den Ansprüchen 16 und 17 ermöglichen eine kleinbauende, mehrere Funktionen aufweisende und einfach aufgebaute konstruktive Ausgestaltung des Führungselementes, welches durch die Ausbildung der Anlage- bzw. Gleitflächen in den Längsrandbereichen eine hohe Sicherheit gegen Verdrehung des Führungselementes gegenüber dem an diesen anliegenden Teil ermöglicht.

Die vorteilhaften Ausgestaltungen nach den Ansprüchen 18 und 19 ermöglichen die Anordnung weiterer Bauelemente unmittelbar am Führungselement.

Gemäß Anspruch 20 ist ein einfacher Aufbau des Führungselementes möglich und sind das Spannelement und Führungselement zueinander positioniert ausgerichtet.

Von Vorteil sind auch die Ausgestaltungen nach den Ansprüchen 21 und 22, wodurch über das in der Aussparung des Führungselementes positioniert gehalterte und von diesem in das Profilstück vorragende Spielbegrenzungselement ein Spielausgleich zwischen der Halterung und dem Mantelrohr oder Halterung in zur Längsrichtung des Spannelementes paralleler Richtung ermöglicht ist, so daß auch bei Fahrten über holprige Fahrstraßen unerwünschte Vibrationsgeräusche vermieden werden.

Die Ausgestaltungen nach den Ansprüchen 23 bis 25 ermöglichen die Festlegung des zumindest ein Fixiermittel aufnehmenden Spannelementes in zwei Raumrichtungen, so daß dieses in Richtung seiner Längserstreckung und in einer dazu querenden Richtung, ohne zusätzlich anzubringende Mittel, positioniert gehalten ist.

Von Vorteil sind auch die Weiterbildungen nach den Ansprüchen 26 und 27, da dadurch eine quasi geringfügig vorgespannte selbstsichernde Aufnahme des Spannelementes oder Spielbegrenzungselementes in den Aufnahmeelementen gegeben ist. Andererseits ist es auch möglich das Sicherungselement als Rückstellelement einzusetzen.

Die einstückige Ausbildung des Führungselementes mit dem Anschlag- bzw. Dämpfungselement, wie im Anspruch 28 beschrieben, trägt zur Reduzierung der Gesamtanzahl der Einzelbauteile einer Fixiereinrichtung bei.

Die Weiterbildung nach Anspruch 29 ermöglicht einerseits die Ausbildung des Führungselementes aus gleichem Werkstoff, wobei durch unterschiedliche konstruktive Ausgestaltungen des Anschlag- und/oder Dämpfungselementes, wie beispielsweise als Biegestab, Zunge etc., und durch das elastische Verformungsvermögen desselben zumindest ein Teil der kinetischen Anschiagenergie absorbiert wird und andererseits durch die Wahl eines eine höhere elastische Verformungseigenschaft aufweisenden Materials eine zusätzliche Erhöhung des Verformungsvermögens und dadurch eine bessere Absorption erreicht und die Übertragung der Anschlagenergie auf den Grundkörper und die Fixiereinrichtung verringert werden kann.

Gemäß Anspruch 30 ist eine gedämpfte Übertragung der beim Anschlagen an eine der Endlagen erzeugten Anschlagenergie auf die Fixiereinrichtung durch die Entkoppelung der Schwingungsträger des Anschlag- bzw. Dämpfungselementes und dem Grundkörper möglich.

Von Vorteil sind auch die Weiterbildungen nach den Ansprüchen 31 und 32, wodurch auf einfache Weise das Belastungsverhalten beeinflußt werden kann, indem beispielsweise die Wandstärke zumindest eines Wandteiles des meanderförmigen Anschlag- bzw. Dämpfungselementes in seiner Eigenschaft in bezug auf Festigkeit, Querschnitt etc. verändert wird und somit eine Anpassung an unterschiedliche Einsatzbedingungen oder an unterschiedliche Typen von Lenkwellenverstelleinheiten vornehmbar ist.

Nach einer weiteren Ausführungsvariante gemäß Anspruch 33 ist eine Anpassung an unterschiedliche konstruktive Ausbildungen oder Anforderungen, wie beispielsweise federelastischer Verformungsweg etc., möglich.

Durch die Weiterbildungen nach den Ansprüchen 34 bis 36 wird erreicht, daß selbst bei einfach ausgebildeten Anschlag- bzw. Dämpfungselementen eine Anpassung an unterschiedliche Formen der Anschlagflächen der Ausnehmung erfolgen kann und durch die Anordnung einer zwischen dem Anschlag- bzw. Dämpfungselement und dem Grundkörper oder der Führungsvorrichtung geschlitzten Trennfuge, die durch die kinetische Energie hervorgerufene Verdrängung des elastisch nachgiebigen Materials begrenzt möglich ist und das weitere Material der Führungsvorrichtung und/oder des Grundkörpers im wesentlichen frei von stoßartigen Kräften bzw. Energien bleibt.

Gemäß den Ansprüchen 37 bis 39 sind unterschiedliche, vorteilhafte Ausbildungen von Anschlag- bzw. Dämpfungselementen aufgezeigt, die aus standardisierten kostengünstigen Bauelementen gebildet sind und als solche am oder im Führungselement integriert oder mit diesem verbunden werden.

Gemäß Anspruch 40 kann durch die Anpassung der Anschlagflächen des Anschlag- bzw. Dämpfungselementes an die Anschlagfläche der Ausnehmung der energieübertragende Anteil der kurzzeitig aufeinandertreffenden Wirkoberflächen vergrößert werden.

Die Weiterbildungen nach den Ansprüchen 41 bis 45 ermöglichen die Anpassung an unterschiedliche Anforderungen in Hinblick auf Robustheit, Lebensdauer etc. und eine einfache kostengünstige Fertigung des bevorzugt im Spritzgußverfahren einstückig hergestellten Führungselementes.

Gemäß Anspruch 46 ist eine weitere Möglichkeit geschaffen, die Eigenschaften des Führungselementes in bezug auf Schwingungsverhalten, Wärmeausdehnung etc. zu verändern, ohne zusätzlichen Aufwand zur Bewahrung der Funktionalität der Fixiereinrichtung betreiben zu müssen.

Von Vorteil sind auch die Ausbildungen nach den Ansprüchen 47 bis 51, wodurch eine Vereinfachung der Montage des Führungselementes an der Fixiereinrichtung erreicht werden kann, da beispielsweise das Fixiermittel und das Spielbegrenzungselement bereits vor dem Einlauf in einer Montageanlage vormontiert werden kann und dadurch eine Position der einzelnen Teile für weitere Fügearbeiten etc. vorgegeben ist und weitere Positioniervorrichtungen, beispielsweise für die Positionierung des Führungselementes, beispielsweise in dem Mantelrohr oder an der Halterung, entfallen können.

Vorteilhaft wird ein derartiges Führungselement nach dem Anspruch 52 in einer Fixiereinrichtung als Träger- und/oder Halteelement für Teile derselben angewandt, da damit der Aufbau der Fixiereinrichtung wesentlich vereinfacht wird.

Die Aufgabe der Erfindung wird aber auch durch die im Anspruch 53 wiedergegebenen Merkmale gelöst. Die überraschenden Vorteile dabei sind, daß zusätzlich zu den Vorteilen gemäß Anspruch 1 mit dem erfindungsgemäßen, mehrere unterschiedliche Funktionen aufweisenden Führungselement eine Vormontage und Positionierung von Teilen der Fixiereinrichtung am Führungselement erfolgen kann und der Herstellungsaufwand, sowie die Herstellkosten einer Fixiereinrichtung, erheblich reduziert werden können.

Die Ausgestaltungen nach den Ansprüchen 54 und 55 ermöglichen einen verschleißschonenden Verstellungsvorgang, da eine Führung des Führungselementes gegenüber dem Mantelrohr und/oder der Halterung in zumindest zwei Raumrichtungen erfolgt.

Gemäß den Ansprüchen 56 und 57 kann durch die Anordnung des elastisch nachgiebigen Rückstellelementes innerhalb des Aufnahmeelementes und durch die unmittelbare Anordnung des das Aufnahmeelement zumindest bereichsweise umgebenden Verstellelementes im Bereich des Aufnahmeelementes einerseits der für die Anordnung eines Fixiermittels erforderliche Platzaufwand an einer Lenkwellenverstelleinheit sehr gering gehalten werden und ist andererseits gewissermaßen eine Schutzummantelung gegen Verschmutzungen der Teile der Fixiereinrichtung geschaffen.

Die Ausgestaltungen nach den Ansprüchen 58 bis 60 ermöglichen die einfache und kostengünstige Herstellung des Verstellelementes.

Die vorteilhaften Ausgestaltungen nach den Ansprüchen 61 und 62 ermöglichen im wesentlichen eine vollflächige Ummantelung des Aufnahmebereiches des Aufnahmeelementes und somit eine Schutzwirkung des Rückstellelementes gegen äußere Einflüsse, sowie gegebenenfalls eine Führung des Verstellelementes in zur Längserstreckung des Führungselementes senkrechter Richtung, so daß das Verstellelement mit seinen Verzahnungselementen senkrecht zur Angriffsoberfläche verstellt werden kann. Somit ist über die gesamte Lebensdauer der Verstelleinrichtung eine sichere Fixierung einer verstellten Relativlage zwischen zwei Teilen, z.B. Mantelrohr und Halterung, möglich.

Von Vorteil ist auch die Ausbildung nach Anspruch 63, da durch die Anordnung des während eines Fahrzeugaufpralles energieabsorbierenden Verformungsteiles unmittelbar im Bereich der den Verstellweg in Richtung der Längsachse des Mantelrohres oder in einer dazu quer verlaufenden Richtung begrenzenden und von dem Spannelement durchsetzten Ausnehmung eine hocheffiziente Sicherheitseinrichtung geschaffen werden kann, ohne hierfür, einen großen Einbauraum erfordernde Sicherheitseinrichtungen, beispielsweise in Form von Reißlaschen etc., vorsehen zum müssen. Dieser Vorteil ist erreichbar, indem das Führungselement ab einer bestimmten zerstörerischen Aufprallenergie zerbricht und das Spannelement in Richtung der Länge der Ausnehmung bewegt wird und die verbleibende, kinetische Energie nach dem Zerbrechen des Führungselementes zur plastischen Verformung des Verformungsteiles führt.

Die bevorzugte Ausführungsform gemäß Anspruch 64 unterstützt einen robusten und platzsparenden Aufbau der Lenkwellenverstelleinheit und deren Fixiereinrichtung, so daß eine hohe Betriebssicherheit über lange Einsatzdauer möglich ist.

Die Weiterbildungen nach den Ansprüchen 65 bis 67 zeichnen sich vor allem dadurch aus, daß der zwischen den beiden Mantelrohrteilen gebildete Freiraum zur Aufnahme des Führungselementes genutzt werden kann und das Führungselement im wesentlichen gehäuseartig umgeben und somit von äußeren, die Lebensdauer verringernden Störeinflüssen geschützt ist.

Vorteilhaft sind auch die weiteren Ausführungsformen nach den Ansprüchen 68 und 69, weil dadurch jene Ausführungen, wie aus dem Stand der Technik bekannt sind, bei denen eine energieabsorbierende Sicherheitseinrichtung als eigene Baueinheit ausgebildet ist, die zwischen der Karosserie und dem Lenkgehäuse angeordnet ist, entfallen können. Die Ausbildung bzw. Anordnung des Verformungsteiles unmittelbar in bzw. an zumindest einem der Teile führen zu einer erheblichen Reduzierung der Herstell- und Montagekosten. Durch die konstruktive Ausgestaltung ist zudem eine Kraftflußoptimierung während des Verformens durch Verhindern von Spannungsspitzen gegeben.

Die Erfindung wird durch die im nachfolgenden anhand der in den Zeichnungen dargestellten verschiedenen Ausführungsbeispiele näher erläutert.

Es zeigen:
- Fig. 1: eine beispielhafte Ausführung einer Lenkwellenverstelleinheit in Seitenansicht und in stark vereinfachter, schematischer Darstellung;
- Fig. 2: eine Verstelleinrichtung und erfindungsgemäße Fixiereinrichtung, in einer entspannten Öffnungsstellung, in Stirnansicht, geschnitten gemäß den Linien II - II in Fig. 1;
- Fig. 3: eine beispielhafte Ausführung eines Mantelrohres in Stirnansicht, geschnitten gemäß den Linien III - III in Fig. 4 und in schematischer Darstellung;
- Fig. 4: das Mantelrohr im Längsschnitt mit einem erfindungsgemäßen Führungselement in vereinfachter, schematischer Darstellung;
- Fig. 5: das Führungselement in perspektivischer Ansicht und in stark vereinfachter, schematischer Darstellung;
- Fig. 6: einen Teilbereich des Mantelrohres und Fühmngsclementes mit einem sich in einer Ausgangsposition befindlichen Anschlag- bzw. Dämpfungselement in Draufsicht und in vereinfachter, schematischer Darstellung;
- Fig. 7: einen Teilbereich des Mantelrohres und Führungselementes mit dem sich in einer Anschlagposition befindlichen Anschlag- bzw. Dämpfungselement in Draufsicht und in vereinfachter, schematischer Darstellung;
- Fig. 8: einen Teilbereich des Mantelrohres und Führungselementes mit einer anderen Ausführung des sich in einer Ausgangsposition befindlichen Anschlag- bzw. Dämpfungselementes in Draufsicht und in vereinfachter, schematischer Darstellung;
- Fig. 9: einen Teilbereich des Mantelrohres und Führungselementes mit einer weiteren Ausführung des sich in einer Ausgangsposition befindlichen Anschlag- bzw. Dämpfungselementes in Draufsicht und in vereinfachter, schematischer Darstellung;
- Fig. 10: einen Teilbereich des Mantelrohres und Führungselementes mit einer anderen Ausführung des sich in einer Ausgangsposition befindlichen Anschlag- bzw. Dämpfungselementes in Draufsicht und in vereinfachter, schematischer Darstellung;
- Fig. 11: einen Teilbereich des Mantelrohres und Führungselementes mit einer weiteren Ausführung des sich in einer Ausgangsposition befindlichen Anschlag- bzw. Dämpfungselementes in Draufsicht und in vereinfachter, schematischer Darstellung;
- Fig. 12: einen Teilbereich des Führungselementes, geschnitten gemäß den Linien XII-XII in Fig. 5 und in vereinfachter, schematischer Darstellung;
- Fig. 13: das Führungselement in perspektivischer Ansicht und in stark vereinfachter, schematischer Darstellung;
- Fig. 14: ein Rückstellelement zumindest eines Fixiermittels einer Fixiereinrichtung in perspektivischer Ansicht und in stark vereinfachter, schematischer Darstellung;
- Fig. 15: ein Verstellelement zumindest des Fixiermittels der Fixiereinrichtung in perspektivischer Ansicht und in stark vereinfachter, schematischer Darstellung;
- Fig. 16: einen Teilbereich eines Teiles, insbesondere Mantelrohr, das Spannelement sowie das dieses aufnehmende Verstellelement, Rückstellelement und Führungselement, wobei sich das Verstellelement in einer entspannten Öffnungsstellung befindet, in Ansicht gemäß der Linie XVI in Fig. 4 und in stark vereinfachter, schematischer Darstellung;
- Fig. 17: das Mantelrohr im Längsschnitt mit einer anderen Ausführungsvariante des erfindungsgemäßen Führungselementes in vereinfachter, schematischer Darstellung;
- Fig. 18: das Mantelrohr im Bereich der, vom Spannelement durchragten Ausnehmung mit einer Deformationsanordnung mit unverformten Verformungsteil in Draufsicht und in stark vereinfachter, schematischer Darstellung;
- Fig. 19: die Deformationsanordnung mit den plastisch verformten Verformungsteil gemäß Fig. 18, in Draufsicht und in stark vereinfachter, schematischer Darstellung;
- Fig. 20: das Mantelrohr im Bereich der, vom Spannelement durchragten Ausnehmung mit einer anderen Ausführungsvariante des energieabsorbierenden Verformungsteiles, in Draufsicht und in stark vereinfachter; schematischer Darstellung;
- Fig. 21: das Mantelrohr im Bereich der, vom Spannelement durchragten Ausnehmung mit einer weiteren Ausfiihrungsvariante des energieabsorbierenden Verformungsteiles, in Draufsicht und in stark vereinfachter, schematischer Darstellung;
- Fig. 22: das Mantelrohr im Bereich der, vom Spannelement durchragten Ausnehmung mit einer anderen Ausführungsvariante des energieabsorbierenden Verformungsteiles, in Draufsicht und in stark vereinfachter, schematischer Darstellung.

Einführend sei festgehalten, daß in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

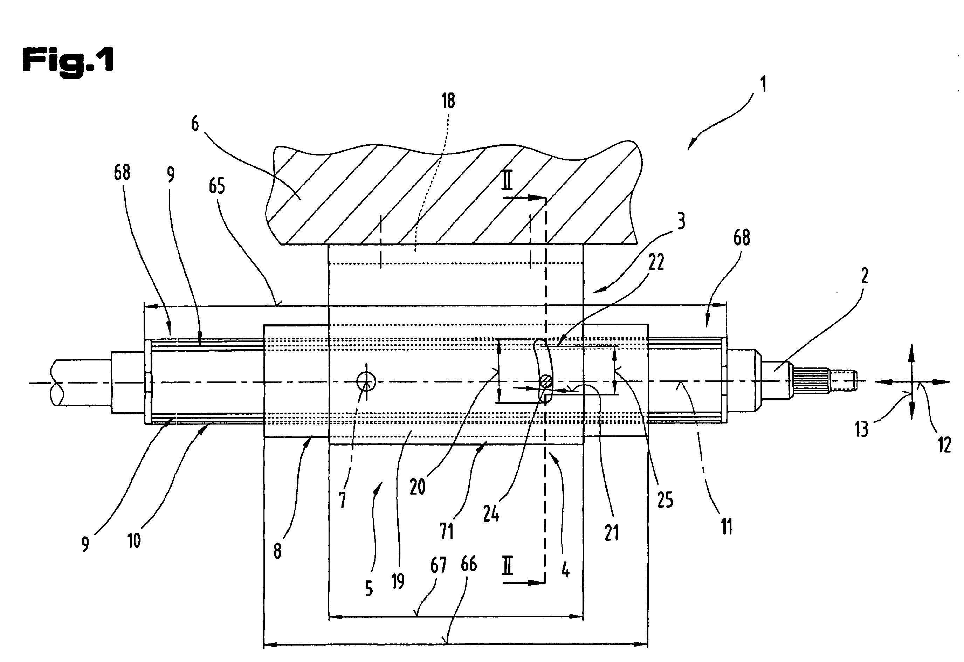

In den Fig. 1 bis 4 ist eine Lenkwellenverstelleinheit 1 mit einer in Richtung der Länge und Höhe verstellbare Lenkwelle 2 gezeigt, welche mit einer Verstelleinrichtung 3 und einer dieser zugeordneten Fixiereinrichtung 4 ausgestattet ist. Die Lenkwellenverstelleinheit 1 besteht aus einer bevorzugt U-förmigen Halterung 5, die mit einer Karosserie 6 fix verbunden ist, und einem innerhalb der U-förmigen Halterung 5 an einer Schwenkachse 7 schwenkbeweglich gelagerten, in etwa U-förmigen oder trapezförmigen etc. Profilstück 8 und einem, über zumindest ein Führungselement 9, wie beispielsweise Führungsleiste, Führungskalotte, Führungskulisse, Kulissenstein etc. , gegenüber dem Profilstück 8 längsverschiebbares, innenliegendes Mantelrohr 10. Das die Lenkwelle 2 drehbeweglich aufnehmende Mantelrohr 10 ist gegenüber der in dem Fahrzeug ortsfest angeordneten Halterung 5 in Richtung einer Längsachse 11 der Lenkwelle 2 - gemäß Doppelpfeil 12 - verschiebbar und zumindest in einer dazu radialen Richtung - gemäß Doppelpfeil 13 - verschwenkbar angeordnet ist, wobei die teleskopierbare Lenkwelle 2 über Lager in einem Lagerteil des Mantelrohres 10 gehaltert ist und/oder relativ zu diesem das Lagerteil in Längsrichtung der Lenkwelle 2 verschiebbar und/oder gegenüber der Halterung 5 verschwenkbar, sowie über zumindest ein Fixiermittel 14; 15 feststellbar gehalten ist. Dadurch ist eine für den Fahrer individuelle Bedienungsposition des Lenkrades, wie in diesem Ausführungsbeispiel gezeigt, manuell einstellbar. Die Fixiereinrichtung 4 wird durch zumindest ein, bevorzugt zwei Fixiermittel 14 und 15 gebildet, die auf einer ebenen Oberfläche 16 der U-förmigen Halterung 5 und/oder an einer dieser gegenüberliegenden ebenen Oberfläche 17 des Mantelrohres 10 angreifen und eine eingestellte Position zwischen zwei Verstellvorgängen fixiert.

Die Halterung 5 weist eine zu der Karosserie 6 benachbarte und mit dieser verbundene Basis 18 und zwei einander gegenüberliegende, sich ausgehend von der Basis 18 in einer zur Karosserie 6 abgewandten Richtung erstreckende Schenkel 19 auf. Die Schenkel 19 verlaufen parallel zu einer auf die Längsachse 11 senkrecht ausgerichteten, mit dieser deckungsgleich verlaufenden Längsmittelebene. Zwischen den gegenüberliegenden Schenkel 19 ist das um die Schwenkachse 7 verschwenkbeweglich gelagerte Profilstück 8 angeordnet. Zumindest einer der beiden Schenkel 19 besitzt eine mit einer Länge 20 und einer Breite 21 quer zur Längsachse 11 der Lenkwelle 2, insbesondere der Schwenkachse 7 zugewandt konvex verlaufende, beispielsweise schlitzartige Ausnehmung 22, für eine Verstellung gemäß dem Doppelpfeil 13. Die Breite 21 der Ausnehmung 22 ist geringfügig größer bemessen, als ein mit einem Durchmesser 23 ausgebildetes, quer zur Längsrichtung der Lenkwelle 2 ausgerichtetes Spannelement 24, das zur Aufnahme zumindest eines oder, wie in diesem Ausführungsbeispiel gezeigt, zwei Fixiermittel 14, 15 ausgebildet ist oder sind. Bevorzugt wird das über ein noch näher zu beschreibendes Führungselement verdrehgesicherte Spannelement 24 durch einen Spannbolzen etc. gebildet. Die Fixiermittel 14, 15 sind gegenüber dem Spannelement 24 verdrehgesichert positioniert gehalten. Die zur Schwenkachse 7 beabstandete Ausnehmung 22 begrenzt mit ihren endseitigen Anschlagflächen einen durch die Differenz der Länge 20 und des Durchmessers 23 resultierenden Verstellweg 25, der je nach Verwendungszweck unterschiedlich ausgeführt werden kann.

Eine senkrecht auf die Längsachse 11 der Lenkwelle 2 ausgerichtete Längsmittelachse 26 des Spannelementes 24 verläuft deckungsgleich mit einer vom Profilstück 8 und dem Mantelrohr 10 ausgebildeten Symmetrieachse 27.

Das von der Halterung 5 innerhalb einer Höhe der Schenkel 19 aufgenommene, bevorzugt um 90° zu dieser verdreht, um die Schwenkachse 7 verschwenkbar angeordnete Profilstück 8 ist in einer entspannten Öffnungsstellung in einem Abstand 28 zu den beiden gegenüberliegenden Schenkeln 19 der Halterung 5 positioniert gehaltert. Zwei von dem Profilstück 8 mit einer Höhe 29 ausgebildete Seitenschenkel 30, sind an einer Außenseite 31 parallel zu der Symmetrieachse 27 verlaufend angeordnet und bilden mit einer die Seitenschenkel 30 schließenden Basis 32 einen U-förmigen Verlauf. Eine von den Seitenschenkel 30 gebildete Innenseite 33 verläuft in Richtung der Mittellinie 17 geneigt zueinander und erweitern sich in zunehmenden Abstand gemäß einem Winkel 34 und schließt an parallel zu der Symmetrieachse 27 angeordnete Endteile 35 an. In einem sich winkelig erstreckenden Zwischenteil 36 der Seitenschenkel 30 ist eine Führungsvorrichtung 37 mit komplementär aufeinander zulaufenden Stütz- und/oder Führungsflächen 38 für die Verschiebung in Längsrichtung des Mantelrohres 10 in einer entspannten Öffnungsstellung oder für die Abstützung des Mantelrohres 10 in einer gespannten Sperrstellung ausgebildet. Ein in einer Querschnittsebene zwischen Stütz- und/oder Führungsflächen 38 gebildeter Winkel ist größer als 90° bemessen. Das vom Spannelement 24 lagepositioniert aufgenommene Profilstück 8 weist an der Basis 32 in Richtung der Symmetrieachse 27 eine Bohrung 40 mit einem Durchmesser 41 auf.

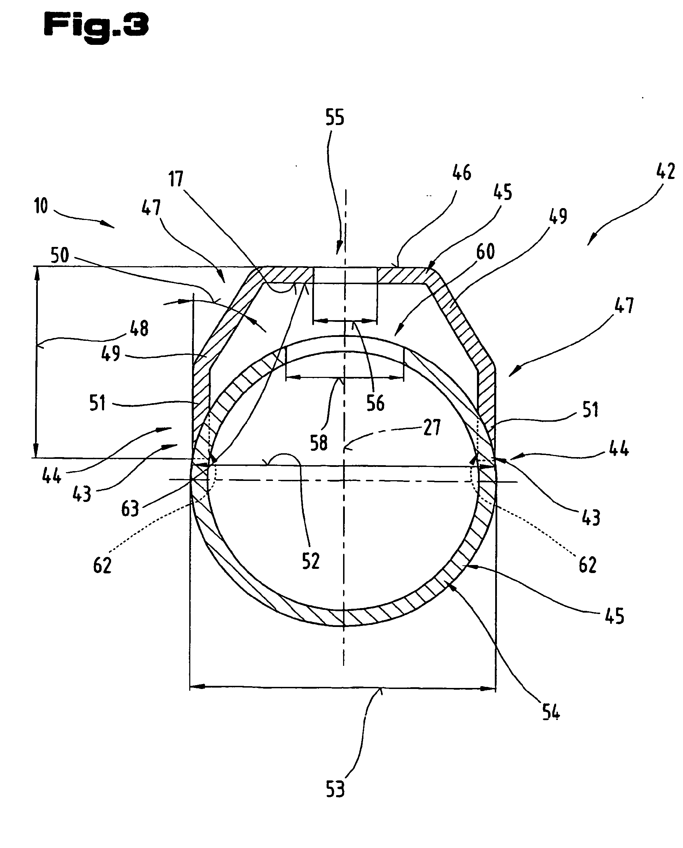

Das mit dem Profilstückes 8 gegenüber der Halterung 5 um die Schwenkachse 7 verschwenkbare Mantelrohr 10 - wie in der Fig. 3 näher dargestellt ist - ist ein- oder mehrteilig, insbesondere mehrteilig, ausgebildet. Das Mantelrohr 10 bildet einen ersten, in Richtung der Längsachse 11 verschiebbaren Teil 42 aus und weist im vorliegenden Ausführungsbeispiel zwei über ein Verbindungselement 43 im Verbindungsbereich 44 miteinander form- und/oder kraftschlüssig verbundene Mantelrohrteile 45 auf. Zweckmäßig weist zumindest einer, der dem Profilstück 8 zugewandte erste Mantelrohrteil 45 in einer zu seiner Längserstreckung senkrechten Ebene einen mehreckigen und der weitere Mantelrohrteil 45 einen kreiszylindrischen Querschnitt auf. Der im Querschnitt etwa U-förmig oder trapezförnüg ausgebildete erste Mantelrohrteil 45 weist zwischen einer Basis 46 und Endbereichen von vorragenden Seitenschenkel 47 mehrere in Richtung einer Höhe 48 geneigt zueinander verlaufend angeordnete Wandteile 49 auf. Diese erweitern sich mit zunehmendem Abstand von der Basis 46, gemäß einem Winkel 50, bis zu parallel zur Symmetrieachse 27 angeordneten Endteilen 51 mit einem Außenmaß 52, die mit dem weiteren Teil 45 verbunden sind. Das Außenmaß 52 ist zweckmäßig gleich oder kleiner bemessen als ein Außendurchmesser 53 des weiteren Teiles 45 bzw. eines diesen bildenden Formrohres 54. Die dem Profilstück 8 zugewandte Basis 46 des Mantelrohrteiles 45 weist eine von dem Spannelement 24 durchragte, in zur Längsachse 11 der Lenkwelle 2 paralleler Richtung verlaufende Ausnehmung 55 auf, die eine Breite 56 und eine durch einen vorbestimmbaren, lateralen Verstellweg bemessene Länge 57 aufweist.

Der von dem ersten Mantelrohrteil 45 zumindest bereichsweise umgebene weitere Mantelrohrteil 45 ist mit einer, zweckmäßig mit einer größeren Breite 58 und Länge 59 versehenen Ausnehmung 60 versehen. Der weitere Mantelrohrteil 45 ist in seiner Längserstreckung mit mehreren voneinander distanzierten, diametral gegenüberliegenden und über einen Teil des Umfanges sich erstreckende Aussparungen 61 versehen, in die von dem ersten Mantelrohrteil 45 in Längsrichtung voneinander distanzierte Befestigungslaschen 62 vorragen. Zur Verbindung des ersten Mantelrohrteiles 45 mit dem weiteren Mantelrohrteil 45 werden diese Befestigungslaschen 62 zweckmäßig abgekantet und anschließend über ein Verbindungselement unlösbar miteinander verbunden.

Die dem weiteren Mantelrohrteil 45 zugewandte Oberfläche 17 des ersten Mantelrohrteiles 45 ist zumindest zum Teil als ebene Führungsfläche 63 ausgebildet, entlang welcher ein Führungselement 64 der Fixiereinrichtung 4, insbesondere des Fixiermittels 15 zumindest bereichsweise zur Anlage kommt. Ein weiterer Teilbereich der Oberfläche 17 fungiert als Angriffsoberfläche für die Klemmverbindung in einer gespannten Sperrstellung eines noch näher zu beschreibenden Verstellelementes mit dem Mantelrohr 10. Demnach ist die einen weiteren Teil 71 bildende Halterung 5 an ihrer äußeren Oberfläche 16 mit der ebenen Führungsfläche 63 für das Führungselement 64 und Angriffsoberfläche für das Verstellelementes versehen. Eine in Richtung der Längsachse 11 der Lenkwelle 2 bemessene Länge 65 des Mantelrohres 10 ist größer bemessen als eine Länge 66 des Profilstückes 8 und eine Länge 67 der Halterung 5.

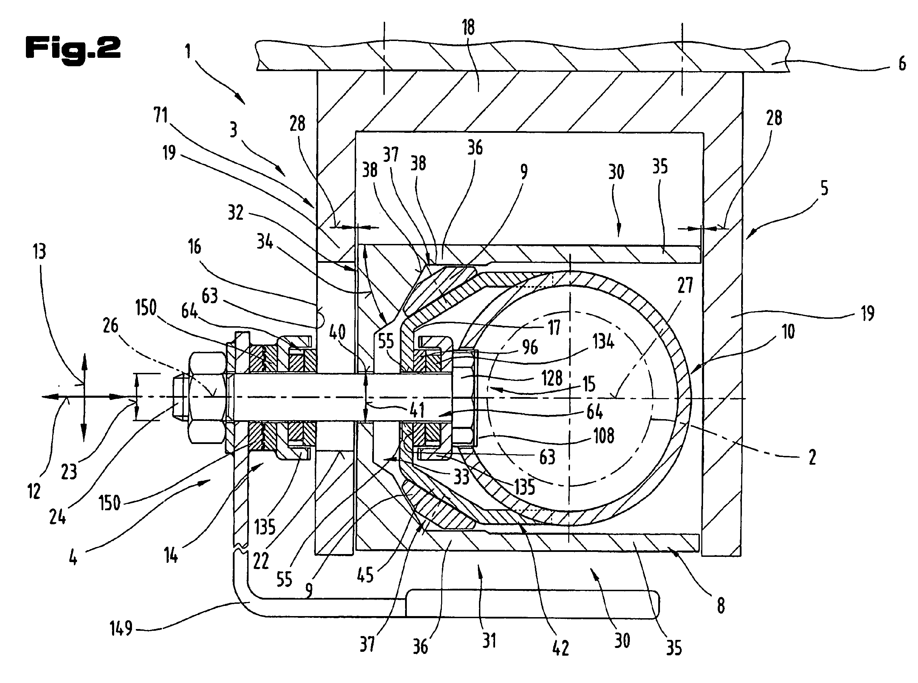

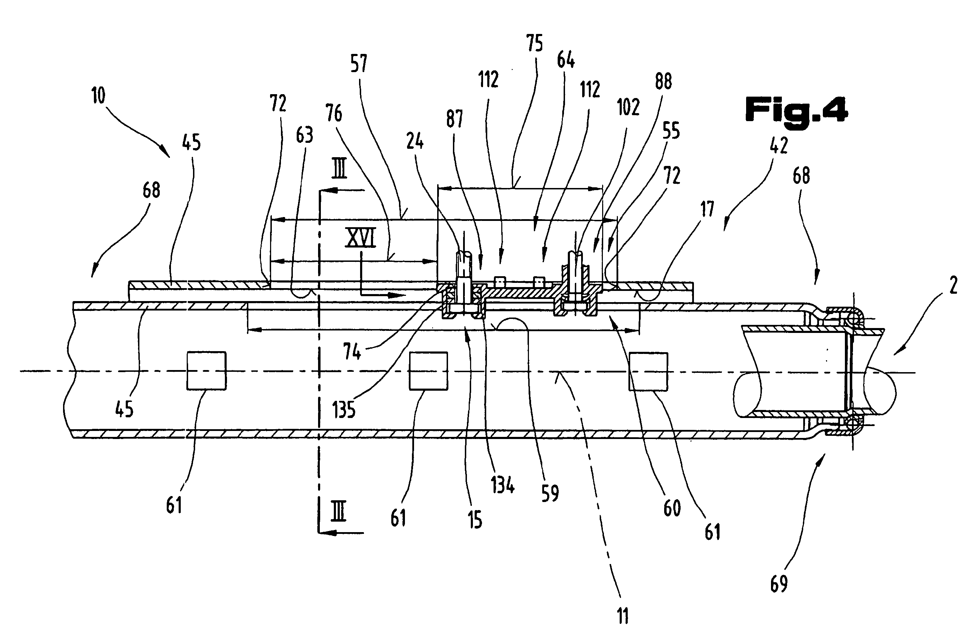

Aus der Fig. 4 ist das Mantelrohr 10 mit der zweckmäßig über in den distalen Endbereichen 68 angeordnete Lagerelemente 69 verdrehbeweglich gelagerte Lenkwelle 2 und das diesem zugeordnete Fixiermittel 15 im Längsschnitt näher dargestellt. Das zur bedarfsweisen Fixierung einer eingestellte Relativlage des Mantelrohres 10 angeordnete Fixiermittel 15 umfaßt das zumindest bereichsweise in die Ausnehmung 55 des Mantelrohres 10 vorragende Führungselement 64, das bei einer Relativverstellung des Mantelrohres 10 gegenüber dem nicht weiters dargestellten Profilstück 8, in eine seiner Endlagen zur Anlage an eine der die Ausnehmung 55 begrenzenden Anschlagfläche 72 kommt. Zur Relativverschiebung des Mantelrohres 10 gegenüber der Halterung 5, ist am Führungselement 64 zumindest eine sich an der Führungsfläche 63 des Mantelrohres 10 und/oder der Halterung 5 abstützende, ebenflächige Längsseitenfläche 73 vorgesehen. Das Führungselement 64 ist dazu mit zumindest einer von dem Spannelement 24 durchragten Aussparung 74, insbesondere Bohrung, ausgestattet und positioniert dieses über das senkrecht auf die Längsseitenfläche 73 ausgerichtete Spannelement 24 in der Ausnehmung 55 gegenüber dem in Richtung der Längsachse 11 parallel verschiebbaren Mantelrohr 10. Eine maximale Führungselementlänge 75 ist zweckmäßig um zumindest den möglichen Verstellweg 76 kleiner bemessen als eine minimale Länge 57 der Ausnehmung 55. Durch die Vorgabe des Verstellweges 76 zwischen dem Führungselement 64 und dem Mantelrohr 10, ist eine Verstellung des Mantelrohres 10 bzw. des nicht weiters dargestellten Lenkrades in zur Längsachse 11 paralleler Richtung, also in Längsrichtung, vorbestimmbar. Wie aus der Fig. 2 ersichtlich, kann das Führungselementes 64 auch in der Ausnehmung 22 der Halterung 5 angeordnet sein, so daß sowohl dem Mantelrohr 10 als auch der Halterung 5 ein Fixiermittel 14, 15 zugeordnet ist.

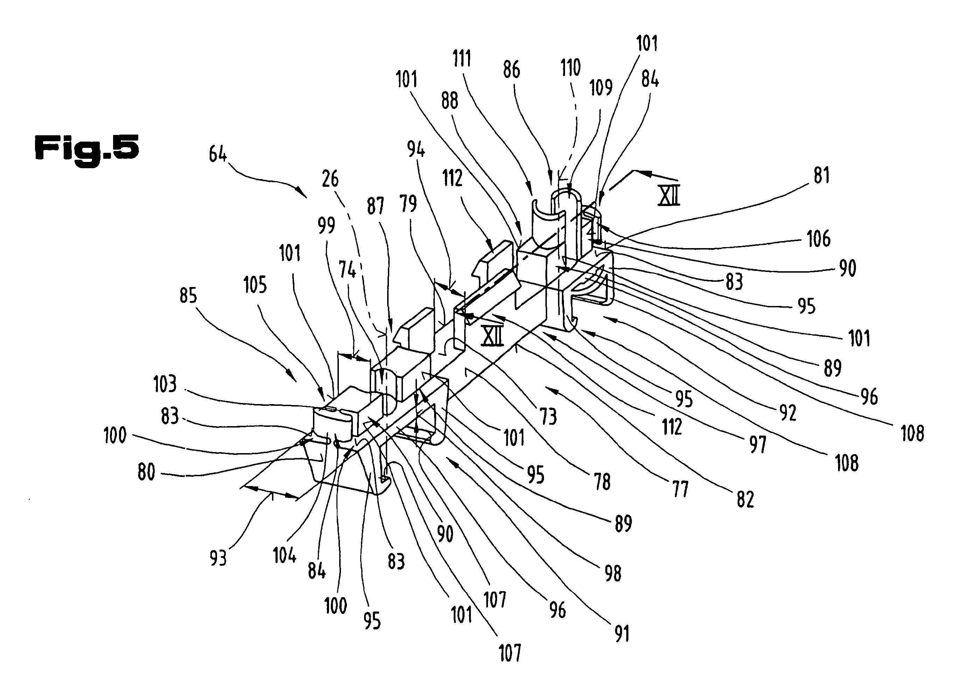

Zur besseren Übersicht des Führungselementes 64 ist dieses in der Fig. 5 in perspektivischer Ansicht gezeigt. Das Führungselement 64 wird in Zusammenschau mit den Fig. 2 und Fig. 4 erläutert. Das Führungselement 64 bildet den durch zwei Breitseitenflächen 78, 79, zwei Stirnseitenflächen 80, 81 und zwei Längsseitenflächen 82, 73 begrenzten, langgestreckten Grundkörper 77 aus, wovon zumindest ein Teilbereich der der Führungsfläche 63 am Mantelrohr 10 zugewandte Längsseitenfläche 73 als Gleit- bzw. Anlagefläche 83 ausgebildet ist. Der Grundkörper 77 weist daher im wesentlichen einen quaderförmigen oder quadratischen Querschnitt auf und ist mit zumindest einer Aussparung 74 zum senkrechten Durchtritt des in der Fig. 4 dargestellten Spannelementes 24 versehen. Dem Grundkörper 77 ist im Längsverlauf zumindest ein elastisch verformbares, rückstellbares Anschlag- bzw. Dämpfungselement 84 zugeordnet. Zweckmäßig sind an voneinander abgewandten Stirnseiten bzw. in gegenüberliegenden Endbereichen 85, 86 Anschlag- bzw. Dämpfungselemente 84 angeordnet, die beim Anschlagen an eine der Endlagen, insbesondere Stirnflächen 72, der Ausnehmung 22, 55 zumindest kurzzeitig elastisch verformt und nach Rückstellung selbsttätig rückgebildet werden.

Der Grundkörper 77 ist zweckmäßig an seiner Längsseitenfläche 73 mit zumindest einer Führungsvorrichtungen 87 für die Seitenführung des Führungselementes 64 gegenüber dem Teil 42; 71 ausgestattet. Zweckmäßig sind zwei in Längsrichtung des Führungselementes 64 voneinander distanzierte Führungsvorrichtungen 87, 88, die in die Ausnehmung 22 des Teiles 71 bzw. Halterung 5 oder Ausnehmung 55 des Teiles 42 bzw. Mantelrohres 10 vorragen, vorgesehen. Die Führungsvorrichtungen 87, 88, insbesondere die Führungsblöcke 89, 90 weisen eine Höhe senkrecht zur Längsseitenfläche 73 auf, die so bemessen ist, daß die Führungsvorrichtungen 87, 88 zumindest in die Ausnehmung 22; 55 vorragen oder diese überragen. Die Führungsvorrichtung 87, 88 ist beispielsweise durch Führungsblöcke 89, 90 gebildet. Möglich ist aber auch jene Ausbildung, in der der Grundkörper 77 des Führungselementes 64 in die Ausnehmung 22; 55 des Teiles 71; 42 zumindest bereichsweise vorragt und der Grundkörper 77 selbst eine Führungsvorrichtung zumindest zur Seitenführung entlang der Ausnehmung 22; 55 bildet. Das Führungselement 64 kommt in einer gespannten Sperrstellung der Fixiereinrichtung, bevorzugt aber auch in einer entspannten Öffnungsstellung mit der Längsseitenfläche 73 zur bereichsweisen Anlage an der Führungsfläche 63 des Mantelrohres 10 und/oder der Halterung 5. Daher stützt sich in der Sperrstellung die Längsseitenfläche 73 auf der Führungsfläche 63 der Halterung 5 und/oder dem Mantelrohr 10 ab, währenddessen diese während einer Verstellungsbewegung aneinander gleiten.

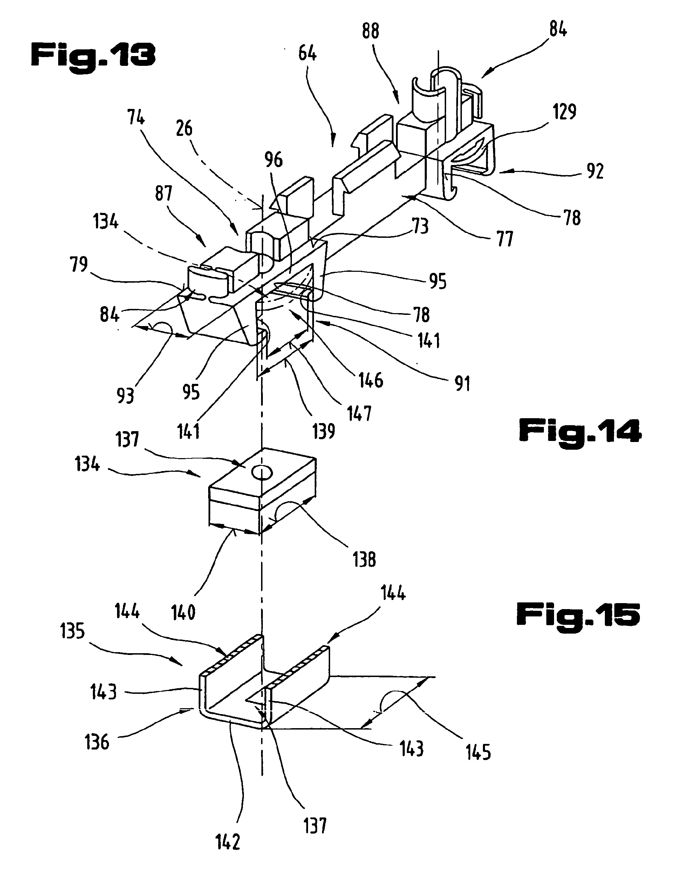

Wie der Fig. 5 weiters zu entnehmen, weist das Führungselement 64 zweckmäßig an den Endbereichen 85, 86 des Grundkörpers 77 jeweils zumindest ein Aufnahmeelement 91, 92 einerseits für die zumindest bereichsweise Aufnahme von Teilen des nicht in dieser Fig. nicht eingetragenen Fixiermittels 14; 15 der Fixiereinrichtung 4 und andererseits für die zumindest bereichsweise Aufnahme von Mittel eines Spielbegrenzungselementes aus. Das Führungselement 64 kann dadurch als Träger- und/oder Halteelement für weitere Teile, insbesondere Fixiermittel 14, 15, der Fixiereinrichtung 4 und/oder für Mittel eines Spielbegrenzungselementes 102, wie in der Fig. 4 dargestellt, verwendet werden. Gemäß dieser Ausführung ist das Führungselement 64 als im Spritzgußverfahren einstückiger Kunststoffbauteil hergestellt. Die Teile der Fixiereinrichtung 4 sind durch zumindest ein Spannelement 24, zumindest ein Rückstellelement und zumindest ein Verstellelement gebildet. Diese Teile und deren Anordnung werden im weiteren noch näher in den Fig. 14 und 15 beschrieben. Natürlich kann der Grundkörper 77 und können die Aufnahmeelemente 91; 92 jeweils einen Bauteil, bevorzugt aus Kunststoff, bilden, die über ein form- und/oder kraftschlüssiges Verbindungselement, insbesondere Kunststoffkleber, Klebstoff etc., zweckmäßig unlösbar miteinander verbunden sind. Zweckmäßig ist eine Breite 93 des Aufnahmeelementes 91, 92 breiter bemessen als eine zwischen den Breitseitenflächen 78 des Grundkörpers 77 bemessene Breite 94. Die Aufnahmeelemente 91, 92 bilden, gemäß diesem Ausführungsbeispiel, einen Teilbereich des Grundkörpers 77 aus und weisen einen in etwa C-förmigen Querschnitt auf. In Längserstreckung des Grundkörpers 77 voneinander distanzierte Haltearme 95 der Aufnahmeelemente 91; 92 sind über eine gemeinsame, sich zwischen diesen erstreckende Basis 96 verbunden. Zwischen der Basis 96 und den Haltearmen 95 ist ein Aufnahmebereich für Teile der Fixiereinrichtung 4 begrenzt bzw. ausgebildet. Die auf der gegenüberliegenden Seite der Haltearme 95 an der Basis 96 ausgebildeten, eine horizontalen Längsebene aufnehmende Längsseitenfläche 73 verläuft zweckmäßig planparallel zu einer Längsseitenfläche 73 eines Zwischenbereiches 97 des Grundkörpers 73. In einer gespannten Sperrstellung, bevorzugt aber auch in der entspannten Öffnungsstellung, verläuft die eine horizontale Längsebene aufnehmende Führungsfläche 63 der Teile 42; 71 deckungsgleich zu der eine horizontale Längsebene aufnehmende Längsseitenfläche 73 des Führungselementes 64.

Der Grundkörper 77 oder die Basis 96 mit einer Wandstärke 98 nimmt an ihrer den Haltearmen 95 abgewandten Längsseitenfläche 73 zumindest die Führungsvorrichtung 87 auf, deren Breite 99 zumindest geringfügig kleiner bemessen ist als eine Breite 56 der Ausnehmung 55 und eine Breite 21 der Ausnehmung 22 in der Halterung 5. Die quer zur Längserstreckung des Führungselementes 77 bemessene Breite 93 der Aufnahmeelemente 91, 92 ist größer bemessen als eine Breite 99 der Führungsvorrichtungen 87 und 88, so daß die Führungsvorrichtung 87, 88 und/oder die Breitseitenflächen 78, 79 des Zwischenbereiches 97 des Grundkörpers 77 seitlich überragenden Längsseitenbereiche 100 in etwa eine streifenförmige Führungsfläche 73 ausbilden. Bevorzugt ist die Breite 94 des Zwischenbereiches 97 des Grundkörpers 77 gleich bemessen, wie die Breite 99 der Führungsvorrichtungen 87, 88. Natürlich kann diese auch unterschiedlich bemessen sein. Die Breite 99 der in die Ausnehmung 22; 55 vorragenden Führungsvorrichtungen 87, 88 ist geringfügig kleiner bemessen als die Breite 21; 56 der Ausnehmung 22 der Halterung und des Mantelrohres 10.

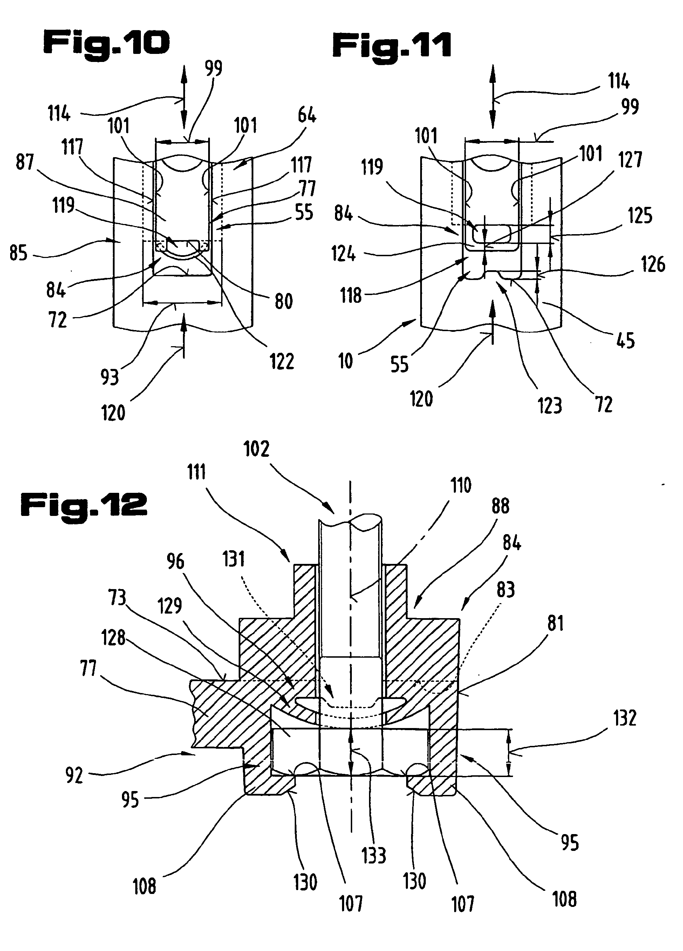

Wie in der Fig. 5 weiters dargestellt, ist die Aussparung 74 für das Spannelement 24 an der Basis 96 und zwischen den Haltearmen 95 angeordnet, so daß die Längsmittelachse 26 des in der Fig. 5 eingetragenen Spannelementes 24 eine Symmetrieachse für das erste Aufnahmeelement 91 ausbildet. Der Durchmesser 41 des Spannelementes 24 ist ebenfalls zumindest geringfügig kleiner bemessen als die Breite 56 der Ausnehmung 55. Die Führungsvorrichtung 87, 88 ist durch zumindest einen von der Aussparung 74 bzw. Bohrung durchbrochenen Führungsblock 89 gebildet. Bevorzugt wird die Führungsvorrichtung 87 durch im wesentlichen zwei voneinander getrennte Führungsblöcke 89, 90 gebildet, die das erste Aufnahmeelement 91 zumindest bereichsweise überdecken. Eine in Längsrichtung des Führungselementes 64 zwischen den Führungsblöcken 89, 90 bemessene Distanz ist kleiner als der Durchmesser 41, so daß in die Führungsblöcke 89, 90 eine kreissegmentförmige Vertiefung zur zentrierten Aufnahme des Spannelementes 24 ausgebildet ist. Der Grundkörper 77 oder die Führungsvorrichtungen 87, 88 bildet, um die Breite 94; 99 voneinander distanzierte und senkrecht auf die Längsseitenfläche 73 ausgerichtete Seitenführungsflächen 101 zur Seitenführung des Führungselementes 64 in und entlang von parallel zu den Seitenführungsfläche 101 verlaufenden Führungsflächen der Ausnehmung 22, 55 aus. Dadurch ist das Führungselement 64 entlang der Ausnehmung 22; 55 in zur Längsachse 11 paralleler und senkrechter Richtung während eines Verstellvorganges in der entspannten Öffnungsstellung geführt gegenüber der Halterung 5 und/oder dem Mantelrohr 10 verstellbar und über das Spannelement 24 und/oder Spielbegrenzungselement 102 in zur Längsseitenfläche 73 senkrechter Richtung positioniert gehalten. Das Spielbegrenzungselement 102 - wie in dieser Fig. nicht weiters dargestellt - wird in der Fig. 12 noch näher erläutert.

Wie weiters aus dieser Fig. zu ersehen ist, sind in den gegenüberliegenden, einander abgewandten Endbereichen 85, 86 der Führungsvorrichtungen 87, 88 ein oder mehrere Anschlag-bzw. Dämpfungselemente 84 angeordnet. Die Anschlag- bzw. Dämpfungselemente 84 können von dem Grundkörper 77 und/oder den Führungsvorrichtungen 87, 88 und/oder den Aufnahmeelementen 91, 92 einstückig im Spritzguß ausgebildet oder in den Endbereichen 85, 86 des Grundkörpers 77 und/oder der Führungsvorrichtungen 87, 88 und/oder den Aufnahmeelementen 91, 92 angeformt oder eingesetzt werden.

Das Anschlag- bzw. Dämpfungselement 84 kann gemäß der Ausführung in der Fig. 5 durch zumindest eine, über einen Verbindungssteg 103 mit den Führungsvorrichtungen 87; 88 und/oder dem Grundkörper 77 und/oder dem Aufnahmeelement 91; 92 bereichsweise verbundene, kreissegmentförmige Zunge 104, gebildet werden. Die elastisch nachgiebig, reversibel ausgebildete, kreissegmentförmige Zunge 104 ist unmittelbar an der Führungsvorrichtung 87 bzw. dem Führungsblock 89 einstückig, im Mehrkomponentenspritzguß am Grundkörper 77 angeformt. Natürlich besteht die Möglichkeit, daß der Verbindungssteg 103 eine größere Länge als Breite aufweist und dadurch die kreissegmentförmige Zunge 104 die Stirnseitenfläche 80, 81 überragt. Alternativ dazu wäre es auch möglich, die Führungsvorrichtungen 87, 88 in Richtung des Zwischenbereiches 97 zu versetzen, so daß die beiden Führungsvorrichtungen 87, 88, wobei jedoch in dieser Fig. nur die Führungsvorrichtungen 87 dargestellt ist, mit den Anschlag- bzw. Dämpfungselementen 84 zu den gegenüberliegenden Stirnseitenflächen 80 distanziert angeordnet sind. Dadurch kann beispielsweise die Führungselementlänge 75 des Führungselementes 64 gleich oder größer wie die Länge 57 der Ausnehmung 55 bemessen werden. Dies wäre vor allem dann sinnvoll, wenn die Lenkwellenverstelleinheit 1 gegebenenfalls hohe Kräfte und/oder Momente übertragen muß und dadurch eine großer Überdeckungsgrad zwischen den Gleit- bzw. Anlageflächen 83 und der Führungsfläche 63 erforderlich ist.

Das durch einen Teilbereich des Grundkörpers 77 und/oder der Führungsvorrichtung 87, 88 und/oder Aufnahmeelement 91, 92 gebildete Anschlag- bzw. Dämpfungselement 84 bzw. die Zunge 104 wird durch zumindest einen, in dem Grundkörper 77 und/oder der Führungsvorrichtung 87, 88 und/oder dem Aufnahmeelement 91, 92 angeordneten schlitzartigen Einschnürungsbereich 105 gebildet. Der Einschnürungsbereich 105, der durch quer zur Längserstreckung des Führungselementes 64 aufeinander zulaufende U-förmige Trennfugen 106 gebildet ist, begrenzt den Verbindungssteg 103 in seiner Breite. Die Abmessungen, insbesondere eine Tiefe und Breite der Trennfugen 106 ist entsprechend den vorgegebenen, zu übertragenden Kräften bzw. Momente auszulegen. Vor allem die Breite hat einen maßgeblichen Einfluß auf die Absorption von kinetischer Energie während einer elastischen Verformung der Zunge 104, wie dies beim Anschlagen an der Anschlagfläche 72 der Ausnehmung 22, 55 der Fall ist.

Diese Breite kann zwischen 0,5 mm und 10 mm, insbesondere zwischen 1 mm und 5 mm, beispielsweise 2 mm, betragen. Durch die Tiefe der Trennfugen 106 resultiert eine Breite bzw. Stärke des Verbindungssteges 103. Die Zunge 104 kann mit ihrer der Längsseitenfläche 73 zugewandten Unterseite am Aufnahmeelement 91, 92 aufliegen oder distanziert zu diesem angeordnet sein. Selbstverständlich besteht auch die Möglichkeit, daß die Zunge 104 mit einem sich zwischen der Längsseitenfäche 73 und der Unterseite der Zunge 104 erstreckenden Längssteg zur Erhöhung der aufzunehmenden kinetischen Verformungsenergie versehen ist.

Die bevorzugt quer zur Längserstreckung des Führungselementes 64 und parallel zueinander verlaufenden Haltearme 95 der Aufnahmeelemente 91, 92 erstrecken sich ausgehend von der Basis 96 in eine zu dieser abgewandten ersten Richtung und sind an ihren freien Endbereichen mit aufeinander zugerichteten, abgewinkelten und zweckmäßig über die gesamte Breite 93 der Haltearme 95 sich erstreckenden, Halteflächen 107 bildende, Vorsprüngen 108 für die positionierte Halterung bzw. bereichsweisen Abstützung des zwischen den Haltearmen 95 anordenbaren Spannelementes 24 oder Spielbegrenzungselementes 102 versehen. Eine Wandstärke der Haltearme 95 ist, ausgehend von der Basis 96, in Richtung der Vorsprünge 108 mit zunehmendem Abstand konisch verjüngend ausgebildet. Zumindest einer der Haltearme 95 ist in einer zu seiner Längserstreckung senkrechten Achse elastisch verformbar und rückstellbar ausgebildet.

Wie weiters aus der Fig. 5 ersichtlich, ist das zu dem Aufnahmeelement 91 gegenüberliegend angeordnete weitere Aufnahmeelement 92 ebenfalls im Querschnitt etwa C-förmig ausgebildet und weist gleichermaßen die Basis 96 und die über diese miteinander verbundenen und voneinander distanzierten Haltearme 95 auf. Zwischen der Basis 96 und den Haltearmen 95 ist ein Aufnahmebereich für das nicht weiters dargestellte Spielbegrenzungselement 102 ausgebildet, wobei an der Basis 96 und zwischen den Haltearmen 95 eine Aussparung 109 für das Spielbegrenzungselement 102 angeordnet ist. Unmittelbar oberhalb des Aufnahmeelementes 92 und um die Wandstärke 98 der Basis 96 ist die Führungsvorrichtung 88 voneinander getrennt ausgebildet oder angeordnet. Eine quer zur Längserstreckung des Führungselementes 64 ausgerichtete Längsmittelachse 110 des Spielbegrenzungselementes 102 bildet die Symmetrieachse für das Aufnahmeelement 92 aus und verläuft parallel zur Längsmittelachse 26 des Spannelementes 24. Ausgehend von der Führungsvorrichtung 88 erstreckt sich ein parallel zur Längsmittelachse 110 des Spielbegrenzungselementes 102 verlaufender, kreissegmentförmiger Führungsteil 111. Dieser weist zumindest zwei gegebenenfalls voneinander getrennte, halbschalenförmige Hülsenteile auf, die die Ausnehmung 55 des Mantelrohres 10 überragen und in eine - nicht weiters dargestellte - in dem Profilstück 8 oder der Halterung 5 vorgesehene Ausnehmung vorragen und das Führungselement 64 gegenüber dem Profilstück 8 und/oder der Halterung 5 positioniert fixieren bzw. diese im wesentlichen spielfrei zueinander positioniert haltern.

Das Führungselement 64 weist zumindest eine Arretiervorrichtung 112 zur lösbaren Befestigung desselben am Teil 42; 71 auf. Diese in die Ausnehmung 22; 55; 60 vorragende Arretiervorrichtung 112 wird durch ein zumindest ein Schnappelement, ein Kupplungselement, ein Rastelement etc. gebildet und ist am Grundkörper 77 an der der Ausnehmung 22, 55 zugewandten Längsseitenfläche 73 angeordnet. Dadurch ist es zum Zwecke der Erleichterung der Montage möglich, das Führungselement 64 z.B. bereits vor Einlauf in eine Montagestraße am Teil 42; 71 anzuordnen.

Zweckmäßig weist das Führungselement 64, in zur Längserstreckung des Führungselementes 64 querender Richtung, zumindest zwei voneinander distanzierte Rastelemente auf. Diese sind im Querschnitt etwa hackenförmig ausgebildet und werden zur lösbaren Befestigung des Führungselementes 64 am Mantelrohr 10 oder Halterung 5 in die Ausnehmung 55 oder 22 eingedrückt und rasten durch die elastisch nachgiebige Ausbildung derselben selbsttätig ein, indem der hackenförmige Teil der Rastelemente einen die Ausnehmungen 55, 22 umgrenzenden Bereich hintergreift. Der hakenförmige Teil der Rastelemente überragt eine maximale Breite 94 des Zwischenbereiches 97.

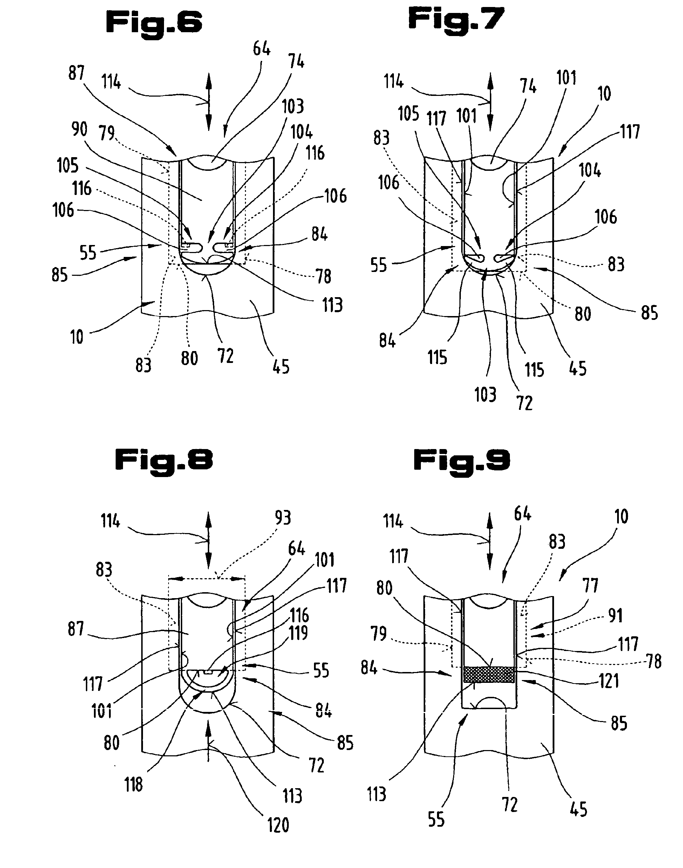

In den gemeinsam beschriebenen Fig. 6 und 7, wo der Endbereich 85 des Führungselementes 64 dargestellt ist, wird die Funktionsweise des energieabsorbierenden Anschlag- bzw. Dämpfungselementes 84 erläutert. Diese Fig. zeigen dabei einen Teilbereich des Teiles 42; 71, insbesondere des Mantelrohres 10 mit der Ausnehmung 55, in die das Führungselement 64 mit seiner Führungsvorrichtung 87 vorragt. Es sei an dieser Stelle darauf hingewiesen, daß sinngemäß das Führungselement 64 auch im Bereich der Halterung 5 mit der Ausnehmung 22 - wie dies jedoch in diesen Fig. nicht weiters dargestellt ist - zu übertragen ist. Wie in diesem Ausführungsbeispiel gezeigt, ist die durch die Anschlagflächen 72 begrenzte Ausnehmung 55 durch ein Langloch gebildet, wonach die Anschlagfläche 72 gekrümmt, insbesondere halbkreisförmig ausgebildet ist.

Wie aus der Fig. 6 ersichtlich, ist das Anschlag- bzw. Dämpfungselement 84 in jener Stellung dargestellt, in welcher sich dieses noch in einer unverformten oder in einer bereits sich wieder rückgeformten Lage befindet. Daher weisen die Trennfugen 106 parallele Seitenflächen auf. Die zumindest annähernd an die Querschnittsform der Anschlagfläche 72 der Ausnehmung 55 angepaßte Anschlagfläche 113 des Anschlag- bzw. Dämpfungselementes 84, weist in diesem Ausführungsbeispiel einen kreisbogenförmigen, der Anschlagfläche 72 zugewandt einen konkaven Verlauf auf. Natürlich können die Anschlagflächen 72, 113 auch in zur Verstellrichtung des Montagerohres 10 - gemäß Doppelpfeil 114 - senkrechter Richtung, wie dies in der Fig. 9 dargestellt ist, verlaufen.

In der Fig. 7 ist nunmehr jener Zustand dargestellt, in welchem das Anschlag- bzw. Dämpfungselement 84 elastisch verformt ist. Dieser Zustand tritt dann ein, wenn ein kraftvoller Verstellvorgang vorgenommen wird und ein zumindest kurzzeitiges Anschlagen des Anschlag- bzw. Dämpfungselementes 84 gegen die Anschlagfläche 72 der Ausnehmung 22; 55 erfolgt. Dabei kommt es zu einer zumindest bereichsweisen elastischen Verformung des Anschlag- bzw. Dämpfungselementes 84, insbesondere der Zunge 104, bei der kinetische Energie im Führungselement 64 und gegebenenfalls im Fixiermittel 14; 15 absorbiert wird. Durch das kraftvolle Anschlagen der Zunge 104 von Teilbereichen 115 an die Anschlagfläche 72 werden diese in Richtung des Einschnürungsbereiches 105 kurzzeitig verdrängt, so daß die ursprünglich U-förmige Trennfuge 106 in etwa V-förmig verformt wird. Durch den zwischen der Zunge 104 und dem Führungsblock 88; 89 der Führungsvorrichtung 87; 88 angeordneten Verbindungssteg 103 kann eine optimale Kraftflußverteilung erfolgen. Der Verbindungssteg 103 bleibt während der Verformung der Teilbereiche 115 starr. Durch die elastische Verformung der Teilbereiche 115 der Zunge 104 kann im wesentlichen der gesamte kinetische Energieanteil absorbiert werden. Weiters ist dabei von Vorteil, daß durch diese Energieabsorption die vom nicht weiters dargestellten Spannelement 24 durchragte Aussparung 74 nicht oder nur gering auf Lochleibung beansprucht wird.

Natürlich besteht auch die Möglichkeit, daß das Anschlag- bzw. Dämpfungselement 84 durch einen Teilbereich, daher ohne Anordnung eines Verbindungssteges 103, der Führungsvorrichtung 87; 88 oder des Grundkörpers 77 gebildet ist. Dies ist insofern möglich, daß die gegenüberliegenden Endbereiche 85, 86, insbesondere die Stirnseitenflächen 80, 81, durch ein zum Grundkörper 77 eine unterschiedliche Eigenschaft aufweisendes Material gebildet ist. Dies ist beispielsweise durch Aufextrudieren eines Materials im Bereich der Stirnseitenflächen 80, 81 möglich.

Wie in der Fig. 6 in strichlierten Linien eingetragen, können im Bereich der Trennfugen 106 zur Begrenzung eines Verstellweges der Teilbereiche 115 des elastisch nachgiebigen Anschlag- bzw. Dämpfungselementes 84 starre Endanschläge 116 angeordnet werden.

Bevorzugt wird von Längsseitenkanten der Ausnehmung 22; 55 je eine senkrecht auf die Führungsfläche 63 der Teile 42; 71 ausgerichtete Führungsfläche 117 zur Längs- bzw. Seitenführung des Trägerelementes 64 mit seiner Seitenführungsfläche 101 gegenüber dem Teil 71 und/oder des Teiles 42 gegenüber dem Trägerelement 64 ausgebildet.

In der Fig. 8 ist eine weitere Ausführungsvariante des dem Führungselement 64 zugeordneten Anschlag- bzw. Dämpfungselementes 84, im Endbereich 85 des Führungselementes 64 und in Draufsicht gezeigt. Das Anschlag- bzw. Dämpfungselement 84 ist zweckmäßig an den gegenüberliegenden Endbereichen 85, 86 des Grundkörpers 77 und/oder der Führungsvorrichtung 87; 88 angeordnet und ist durch einen quer zur Längserstreckung des Führungselementes 64 verlaufenden, elastisch nachgiebigen Verformungssteg 118 gebildet. Dieser Verformungssteg 118 ist am Führungselement 64 einstückig, im Spritzgußverfahren angeformt oder wird durch einen Teilbereich desselben gebildet. Der Verformungssteg 118 ist, gleich wie die Zunge 104, wie diese in den vorhergehenden Fig. dargestellt wurde, an seiner der Längsseitenfläche 73 zugewandten Unterseite aufliegend oder geringfügig zu dieser distanziert angeordnet. Ein zwischen der Stirnseitenfläche 80; 81 und dem bevorzugt aus elastischem Kunststoff gebildeten Verformungssteg 118 ausgebildeter Freiraum 119 ermöglicht das elastische Verformen infolge einer Kraftbeaufschlagung - gemäß Pfeil 120 - des Verformungssteges 118, wobei ein maximaler Verformungsweg des Verformungssteges 118 beispielsweise durch einen die Stirnseitenfläche 80; 81 überragenden Endanschlag 116 begrenzt ist. Der Verformungssteg 118 weist einen kreisbogenförmigen, der Stirnseitenfläche 80 zugewandt konvexen Verlauf auf. Die Anschlagfläche 113 ist zumindest annähernd an die Anschlagfläche 72 der Ausnehmung 22; 55 angepaßt.

In der Fig. 9 ist eine andere Ausführungsvariante des Anschlag- bzw. Dämpfungselementes 85 gezeigt. Dieses ist in Endbereichen 85, 86 des quadratisch oder quaderförmig ausgebildeten Grundkörpers 77 und/oder des Aufnahmeelementes 91, 92 angeordnet. In diesem Ausführungsbeispiel wird das Anschlag- bzw. Dämpfungselement 84 durch an der Stirnseitenfläche 80 angeordneten, elastisch nachgiebigen Kunststoffschichte 121, insbesondere Elastomer, gezeigt. Diese elastisch nachgiebige reversible Kunststoffschichte 121 kann beispielsweise unmittelbar an der Stirnseitenfläche 80, 81 aufextrudiert oder über eine Kleberschichte als eigenständiger Bauteil, beispielsweise an der Stirnseitenfläche 80, 81, angeklebt werden. Daher könnte im einfachsten Fall das Führungselement 64 durch einen quaderförmigen Grundkörper 77 mit in dessen gegenüberliegenden Endbereichen 85, 86 angeordneten Anschlag- bzw. Dämpfungselementen 84 und zwischen den Endbereichen 85, 86 angeordnete Aufnahmeelemente 91; 92 gebildet werden. Dabei kann das Anschlag- bzw. Dämpfungselement 84 durch den Grundkörper 77 selbst gebildet oder durch zusätzliche Anordnung, wie beispielsweise Einsetzen, Anformen, Aufextrudieren gebildet werden.

In der Fig. 10 ist eine weitere Ausführungsvariante des dem Führungselement 64 zugeordneten Anschlag- bzw. Dämpfungselementes 84 gezeigt. Dieses ist in dem Endbereich 85, 86 des Grundkörpers 77 und/oder der Führungsvorrichtung 87, 88 angeordnet. In der vorliegenden Ausführung wird dieses durch einen eigenständigen, blattfederartigen Einsatzteil 122 gebildet, der bei der Fertigung des als Spritzgußteil ausgebildeten Führungselementes 64 in einer vorbestimmten Lage vor bzw. während des Spritzgießens positioniert wird und somit einen integralen Bestandteil in dem Führungselement 64 ausbildet. Der Einsatzteil 122 ist mit seinen freien Endbereichen in den Freiraum 119 zumindest bereichsweise umgrenzenden Vorsprüngen bewegungsfest eingesetzt. Bevorzugt ist eine minimale Länge des Einsatzteiles 122 grö-ßer bemessen, als die der Führungsvorrichtung 87; 88 Dadurch ist der Einsatzteil 122, der beispielsweise in Form einer Blattfeder ausgebildet ist, in sich selbst vorgespannt. Für die infolge einer Krafteinwirkung - gemäß Pfeil 120 - hervorgerufene Auslenkung des Einsatzteiles 122, ist der eine Rücksetzung bildende Freiraum 119 zwischen diesem und der Führungsvorrichtung 87, 88 oder dem Grundkörper 77 vorgesehen. Zweckmäßig überragt der Einsatzteil 122 die Stirnseitenfläche 81; 82 des Führungselementes 64. Derartige Einsatzteile 122 sind bevorzugt durch metallische Werkstoffe gebildet. Der Einsatzteil 122 ist in zumindest einem seiner Endbereiche im Führungselement 64 beweglich gehalten. Selbstverständlich besteht auch die Möglichkeit, daß der Einsatzteil 122 quer zur Längsrichtung des Führungselementes 64 ausgerichtet ist und zur Betätigung des Einsatzteiles 122 im Bereich der Anschlagflächen 72 ein Vorsprung ausgebildet ist. Eine andere, nicht weiters dargestellte Ausführung besteht darin, daß anstatt des Einsatzteiles 122 in den in dem Grundkörper 77 oder der Führungsvorrichtung 87, 88 angeordneten Freiraum 119 ein Quetschsteg oder Faltensteg angeordnet ist.

In der Fig. 11 ist eine weitere Ausführungsvariante des Anschlag- bzw. Dämpfungselementes 84 gezeigt. Der als Biege- und/oder Stanz- und/oder Zuschnitteil gefertigte Teil 42 des Mantelrohres 10 oder Teiles 71 der Halterung 5 kann im Bereich der Anschlagfläche 72 der Ausnehmung 22, 55 an den gegenüberliegenden Anschlagflächen 72 mit aufeinander zugewandten Vorsprüngen 123 versehen werden. Bei einer Relativverstellung des Mantelrohres 10 gegenüber dem Führungselement 64 wird durch eine hohe Anschlagkraft - gemäß Pfeil 120 - eine elastische Verformung des Anschlag- bzw. Dämpfungselementes 84 in Richtung des Freiraumes 119 bewirkt. Der Freiraum 119 ist in der Führungsvorrichtung 87, 88 und/oder dem Grundkörper 77 ausgebildet und ist von Randbereichen, in Form eines Rahmens umgrenzt. Dadurch wird der Verformungssteg 118 durch einen sich über die Breite 99 erstrekkenden Randsteg 124 gebildet. Eine minimale Freiraumhöhe 125 ist zumindest geringfügig größer bemessen als eine Summe einer maximalen Vorsprunghöhe 126 zzgl. einer maximalen Wandstärke 127 des Randsteges 124. Der Freiraum 119 besitzt eine im wesentlichen rechteckförmige Form.

In der Fig. 12 ist ein Teilbereich des Führungselementes 64 mit dem Aufnahmeelement 92, dem Anschlag- bzw. Dämpfungselement 84, sowie das diesem Aufnahmeelement 92 zugeordnete Spielbegrenzungselement 102 im Längsschnitt und in stark vereinfachter, schematischer Darstellung gezeigt. Im einfachsten Fall wird das Spielbegrenzungselement 102 durch eine Schraubenmutteranordnung gebildet, wobei, wie bereits oben beschrieben, ein Schaft der Schraube in eine nicht näher dargestellte Ausnehmung in dem Profilstück 8 und/oder der Halterung 5 vorragt bzw. dieses oder diese überragt und über eine selbstsichernde Mutter auf ein vorbestimmbares Anziehmoment zum Ausgleich eines möglichen Spieles zwischen dem Führungselement 64 und dem Mantelrohr 10 bzw. dem Mantelrohr 10 gegenüber dem Profilstück 8 und/oder der Halterung 5 angezogen wird. Der genauere Aufbau der Haltearme 95 der Führungsvorrichtung 88, sowie des Führungsteiles 111, wurde bereits oben ausführlich beschrieben.

Die Vorsprünge 108 übergreifen bzw. hintergreifen zumindest bereichsweise einen Kopf 128 der Schraubenanordnung. Das Aufnahmeelement 92 weist an einer den Haltearmen 95 zugewandten Innenseite der Basis 96 ein sich zwischen den gegenüberliegenden Haltearmen 95 erstreckendes, federelastisch wirkendes, streifenförmiges Sicherungselement 129, das ein Loslösen des Spielbegrenzungselementes 102 verhindert oder als Rückstellelement für das Fixiermittel 14; 15 - wie dies noch beschrieben wird - dient, auf. Eine lichte Weite zwischen den gegenüberliegenden Haltearmen 95 ist zumindest geringfügig größer bemessen, als eine maximale Schlüsselweite des Kopfes 128 der Schraubenanordnung. Das Sicherungselement 129 weist einen gekrümmten, insbesondere zur Basis 96 zugewandt konvexen Verlauf auf.

Wird die Schraubenanordnung in das Aufnahmeelement 92 verbracht, wird durch die elastisch nachgiebige Ausbildung zumindest eines Haltearmes 95 in zur Längsmittelachse 110 etwa senkrechten Achse so lange verdrängt, bis der Kopf 128 in eine überdeckende bzw. überlappende Lage mit den Halteflächen 107 der Vorsprünge 108 kommt und die Haltearme 97 sich nach dem Einrasten der Schraubenanordnung zwischen den Haltearmen 97 selbsttätig rückstellt. Das Auseinanderdrücken der Haltearme 95 während des Einschiebens in zur Längsmittelachse 110 paralleler Richtung der Schraubenanordnung erfolgt dadurch, daß beim Auftreffen des Kopfes 1223 an geneigt aufeinander zulaufenden Flanken 130 der Vorsprünge 108, die Haltearme 97 durch die fortwährende Verschiebung der Schraubenanordnung seitlich verdrängt werden. In einer eingerasteten Stellung ist die Schraubenanordnung im Aufnahmebereich des Aufnahmeelementes 92 durch das Sicherungselement 129 zwischen diesem und den Vorsprüngen 108 zumindest geringfügig vorgespannt und zumindest in Richtung der Längsmittelachse 110 der Schraubenanordnung spielfrei und gesichert gehaltert. Durch die einander zugewandten Wandungen der Haltearme 95 ist zudem die Schraubenanordnung verdrehgesichert gehalten. Eine derartige selbstsichernde Anordnung des Spielbegrenzungselementes 102 ist vor allem dann von Vorteil, wenn die Produktion von Fixiereinrichtungen 4 bzw. der Lenkwellenverstelleinheit 1 in automatisierten Montagestraßen durch die Vormontage derselben erfolgt und sich dadurch die Handhabeoperationen, sowie die konstruktiven Ausgestaltungen von Montage- bzw. Bearbeitungsstationen erheblich vereinfachen.

Durch Anordnung eines Anschlagelementes 131 im Bereich der Unterseite der Basis 96 und benachbart zu der Schraubenanordnung, kann ein maximaler Verstellweg des federelastischen Sicherungselementes 129 in Richtung der Längsmittelachse 110 begrenzt werden. Ein zwischen den Halteflächen 107 und einem Scheitelpunkt des Sicherungselementes 129 bemessener Abstand 132 ist zumindest geringfügig kleiner bemessen als eine Kopfhöhe 133. Wie weiters ersichtlich ist ein Teilbereich der Längsseitenflächen 73 des Führungselementes 64, insbesondere im Bereich des Aufnahmeelementes 92 als Gleit- bzw. Anlagefläche 83 ausgebildet.

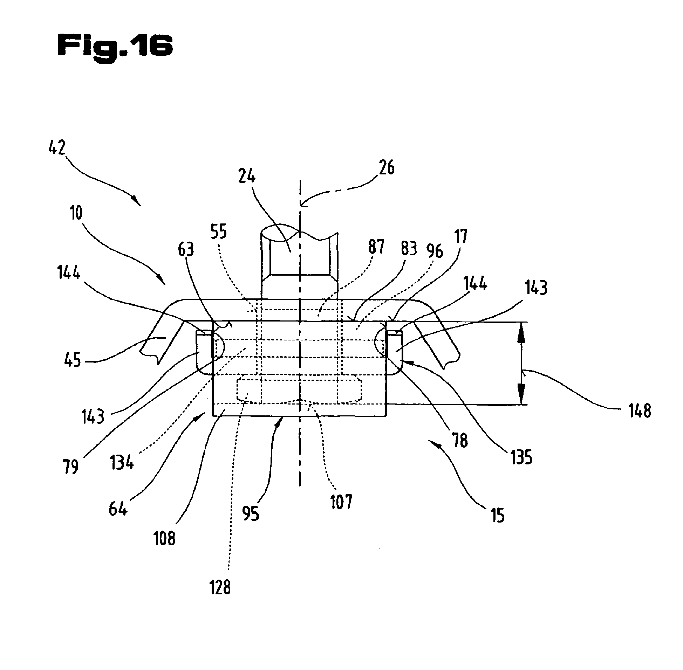

In den Fig. 13 bis 16 ist das Fixiermittel 15 der Fixiereinrichtung mit dem Führungselement 64 in explosionsartiger Darstellung und perspektivischer Ansicht gezeigt. Das zumindest ein elastisch nachgiebiges Rückstellelement 134 und zumindest ein, ein Verstellelement 135 bildendes Klemmelement 136 umfassende Fixiermittel 15 umgreift zumindest einen Teilbereich des Aufnahmeelementes 91 des Führungselementes 64. Das Führungs- und Rückstell- und Klemmelement 64, 134, 136 weisen jeweils eine Aussparung 74, 137 zur positionierten Halterung deren über das Spannelement 24 auf. Die Mittelachsen der Aussparung 137 des Rückstellelementes 134 und Klemmelementes 136 verlaufen fluchtend zu der Längsmittelachse 26 des Spannelementes 24. Wie in diesem Ausführungsbeispiel gezeigt, ist das Rückstellelement 134 durch einen in etwa streifenförmigen, elastisch nachgiebigen, reversiblen Kunststoff gebildet und ist etwa quaderförmig ausgebildet. Dabei ist eine maximale Länge 138 des Rückstellelementes 134 zumindest geringfügig kleiner bemessen, als eine minimale lichte Weite 139 zwischen den in Längsrichtung des Führungselementes 64 gegenüberliegenden Haltearmen 95. Gleichermaßen ist eine maximale Breite 140 des Rückstellelementes 134 bevorzugt geringfügig kleiner ausgebildet als die im Bereich des Aufnahmeelementes 91 bemessene Breite 93. Dadurch wird das Rückstellelement 134 vollständig von dem Aufnahmeelement 91 aufgenommen. Das Rückstellelement 134 weist in Richtung der Längsmittelachse 26 einen elastischen Federweg auf. Durch die positionierte Aufnahme des Rückstellelementes 134 über das Spannelement 24 und/oder den von den Haltearmen 95 ausgebildeten, einander zugewandten Innenseitenflächen 141, ist dieses gegenüber Verdrehung gesichert.

Eine andere, nicht weiters dargestellte Ausführung des vorgespannten Rückstellelementes 134 besteht darin, daß dieses durch ein Federpaket, bestehend aus mehreren auf einer ebenflächigen Platte sich abstützenden zylindrischen Schraubenfedern, z.B. Druckfedem, Tellerfedern, Blattfedern, welche sich an der Unterseite der Basis 96 des Aufnahmeelementes 91 abstützen und sich infolge einer Kraftbeaufschlagung in zur Längsmittelachse 26 paralleler Richtung elastisch verformen und auf diese Weise eine Verstellung des mit diesen wirkungsverbundenen Stellelementes 135 in zur Längsmittelachse 26 paralleler Richtung und zur Angriffsoberfläche senkrechter Richtung ermöglichen.

Das zwischen dem Kopf 128 des Spannelementes 24 und dem sich an der Unterseite der Basis 97 abstützenden Rückstellelement 134 angeordnete Verstellelement 136 weist einen im wesentlichen U-förmigen Querschnitt auf, wovon eine von der Aussparung 137 durchragte Basis 142 an einer den Vorsprüngen 108 der Haltearme 95 zugewandten Seite angeordnet ist. Die Aussparung 137 im Verstellelement 135 ist mehreckig ausgebildet und sind das Spannelement 24 und das Verstellelement 135 verdrehgesichert miteinander verbindbar. Sich ausgehend von der Basis 142 in Richtung des Teiles 44; 71 erstreckende Schenkel 143 weisen an ihren freien Endbereichen Verzahnungselemente 144 für die Herstellung einer bedarfsweisen Klemmverbindung zwischen dem Verstellelement 136 und der Oberfläche 16; 17 der Halterung 5 und/oder des Teiles 44 auf. Natürlich besteht auch die Möglichkeit, anstatt den Verzahnungselementen 144, eine aufgerauhte bzw. strukturierte Oberfläche auszubilden. Zweckmäßig ist das Verstellelement 135 durch einen einteiligen Zuschnitt- und/oder Stanz- und/oder Biegeteil gebildet, der in einem Abkantverfahren seine Querschnittsform erhält. Ist das Verstellelement 135 mehrteilig ausgebildet, so werden die Schenkel 143 über ein form- und/oder kraftschlüssiges Verbindungselement mit der Basis 142 verbunden. Natürlich kann dieser auch durch einen Sinterteil, insbesondere aus Stahl, gebildet werden. Eine maximale Verstellelementlänge 145 ist zumindest geringfügig kleiner bemessen als eine zwischen den Innenseitenflächen 141 bemessene lichte Weite 139. Der durch die Haltearme 95 begrenzten Aufnahmebereich 146 ist daher von dem Verstellelement 135, im wesentlichen vollständig, umgeben. Bevorzugt ist die maximale Länge 145 des im Aufnahmebereich 146 angeordneten Verstellelementes 135 zumindest geringfügig größer bemessen, als eine minimale Öffnungsweite 147 zwischen den aufeinander zuragenden Vorsprüngen 108 der Haltearme 95.

In einem zusammengesetzten Montagezustand, ist das, das Führungselement 64 und zumindest ein Verstellelement 135, sowie zumindest ein Rückstellelement 134 umfassende Fixiermittel 15, sowie das zumindest eine Spannelement 24 innerhalb des Aufnahmebereiches 146 des Aufnahmeelementes 91 verdrehgesichert und positioniert gehalten. Zweckmäßig ist zumindest ein Teilbereich der Breitseitenflächen 78, 79 im Bereich des Aufnahmeelementes 91 als Seitenführungsflächen für das Verstellelement 135 ausgebildet, so daß durch Betätigung der ein Betätigungselement, z.B. Hebel 148, und das zumindest eine relativ verstellbare Fixiermittel 14, 15 sowie das zumindest eine Spannelement 24 umfassenden Fixiereinrichtung 4, das Verstellelement 135 mit dem Verzahnungselementen 144 stets senkrecht auf die den Verzahnungselementen 144 zugewandte Oberfläche 16; 17, insbesondere Angriffoberfläche des Teiles 71; 42 geführt verstellt wird.

Ein zwischen der Unterseite der Basis 96 und der Haltefläche 107 der Vorsprünge 108 senkrecht bemessener Abstand 148 in Richtung der Längsmittelachse 26 ist derart bemessen, daß diese gleich oder geringfügig kleiner bemessen ist als ein durch die Summe der Kopfhöhe des Spannelementes 24 und Wandstärke der Basis 142 des Verstellelementes 135 und einer unbelasteten Federlänge des Rückstellelementes 134 gebildetes Maß. Dieser Abstand 148 und eine damit verbundene Vorspannkraft bzw. Anpreßkraft des Führungselementes 64 gegenüber dem Mantelrohr 10 und/oder Halterung 5 kann frei eingestellt werden, so daß selbst in einer entspannten Öffnungsstellung das Führungselement 64, insbesondere ihre Längsseitenfläche 73 an das Mantelrohr 10 oder die Halterung 5, insbesondere an die Führungsfläche 63 mit einer vorbestimmten Kraft angepreßt wird. Die von zumindest einem Rückstellelement 134 erzeugte Vorspannkraft bewirkt im gelösten Zustand einen minimalen Verstellwiderstand, so daß der Bediener ohne Aufbringung einer Gegenkraft die eingestellte Bedienungshöhe fixieren kann.

Nach dem Einrasten des das Verstellelement 135 und Rückstellelement 134 aufnehmenden Spannelementes 24 in dem Aufnahmebereich 146 zwischen den Haltearmen 95 ist das Fixiermittel 15 und das Spannelement 24 vom Führungselement 64 lösbar gehaltert. Eine Schlüsselweite des Kopfes 128 des Spannelementes 24 ist gleich oder geringfügig kleiner bemessen als die lichte Weite 139, so daß das Spannelement 24 verdrehgesichert gehaltert ist.

Es sei an dieser Stelle darauf hingewiesen, daß die Anordnung des weiteren Aufnahmeelementes 92 des Führungselementes 64 ausschließlich für eine weitere Funktion angeordnet ist und das Führungselement 64 auch ausschließlich mit einem Aufnahmeelement 91 für das Fixiermittel 15 ausgebildet werden kann.

Natürlich besteht auch die Möglichkeit, daß im Bereich der Unterseite der Basis 96 des Aufnahmeelementes 91 das Rückstellelement 134 einstückig angeformt oder von dem Aufnahmeelement 91 ausgebildet ist. Eine derartige mögliche Ausführung ist in strichpunktierten Linien in der Fig. 13 dargestellt. Beispielsweise ist es möglich, daß an der Unterseite der Basis 96 ein elastisch nachgiebiger Metallstreifen angeordnet ist, der in Form einer in sich vorgespannten Blattfeder ausgebildet ist und einen etwa kreisbogenfönmigen, insbesondere zur Basis 96 zugewandt konvexen Verlauf aufweist. Dadurch kann von diesem Rückstellelement 134 einerseits die positionierte Halterung des Fixiermittels 15 am Führungselement 64 bewirkt und andererseits der für die Verstellung des Fixiermittels 15 von einer entspannten Öffnungsstellung in eine gesperrte Sperrstellung erforderliche elastische Federweg ausgebildet werden. Eine derartige Ausführung hat vor allem den Vorteil, daß durch das Anformen, Einsetzen oder durch die Ausbildung des Rückstellelementes 134 am Führungselement 64 ein weiterer Einzelbauteil vermieden werden kann und eine weitere Reduzierung der Herstellkosten, durch den einfacheren konstruktiven Aufbau des Führungselementes 64 und des Fixiermittels 15 beiträgt.

Das Führungselement 64, insbesondere der Grundkörper 77 und/oder das Anschlag- bzw. Dämpfungselement 84 können aus einem stoß- bzw. energieabsorbierenden Material, wie beispielsweise thermoplastische Kunststoffe, gebildet werden. Diese können beispielsweise Polyurethan (PUR), Polypropylen (PP), Polyvinylchlorid (PVC), Polyamid (PA), Polycarbonat (PC), Polystyrol (PS), Styrol-Butadien (SB), Polytetrafluoräthylen (PTFE), Polyoxymethylen (POM) oder Gummi, Naturkautschuke, Silikone, etc., sein. Gegebenenfalls kann der Grundkörper 77 und/oder das Aufnahmeelement 91, 92 aus, insbesondere thermoplastischem Kunststoff, z.B. Polyvinylchlorid (PVC), einem glasfaserverstärkten oder faserverstärkten Kunststoff, z.B. Styrol-Acrylnitril (SAN), Polypropylen (PP) mit Faserverstärkung, Polyoxymethylen (POM) mit Faserverstärkung, etc., gebildet werden. Zweckmäßig ist das Führungselement 64 durch einen einstückigen Mehrkomponentenspritzgußteil gebildet. Natürlich kann das Führungselement 64, insbesondere der Grundkörper 77 und/oder das Anschlag- bzw. Dämpfungselement 84 auch durch Metall oder einem Verbundwerkstoff aus Metall und Kunststoff gebildet werden.

Die Funktionsweise der Verstell- und Fixiereinrichtung 3, 4 wird anhand der Zusammenschau der Fig. 2 und Fig. 13 bis 16 erläutert:

Eine beispielhafte Ausführung der Fixiereinrichtung 4 ist in der Fig. 2 gezeigt. Der Verstelleinrichtung 3 für eine Lenkwelle 2 ist zumindest eine Fixiereinrichtung 4 zugeordnet, wobei das quer zur Längsachse 11 der Lenkwelle 2 verlaufende Spannelement 24 in Längsrichtung mittels des Betätigungselementes, z.B. Hebel 149, relativ zueinander verstellbare Fixiermittel 14, 15 aufweist. Um eine Verstellung der Fixiereinrichtung 4 von einer entspannten Öffnungsstellung in eine gespannte Sperrstellung auszuführen, werden durch Betätigung des Hebels 149 ineinandergreifende Nockenscheiben 150 radial zueinander bewegt, mittels welcher das Verstellelement 135 der Fixiermittel 14; 15, entgegen der Wirkung der elastischen Rückstellelemente 134, in Richtung der Angriffsobertlächen verstellt wird.

Vorteilhafterweise wird die dem Fixiermittel 14 nähergelegene, bewegungsfest angebrachte Nockenscheibe 150 einstückig an bzw. mit dem Fixiermittel 14 angeformt und/oder verbunden. Gleichermaßen ist dies auch auf die weitere Nockenscheibe 150 übertragbar, die beispielsweise mit dem Hebel 149 drehfest verbunden und/oder einstückig an diesem angeformt ist. Natürlich kann die Nockenscheibe 150 über alle aus dem Stand der Technik bekannten Verbindungsarten, beispielsweise durch Schweißen, Kleben, Löten etc., mit dem Fixiermittel 14 und/oder mit dem Hebel 149 verbunden werden. Derartige Nockenscheiben 150 mit Schraubflächen für die Umsetzung einer Radialbewegung in eine in Längserstreckung des Spannelementes 24 verlaufende, lineare Bewegung sind bereits allgemeiner Stand der Technik.

Die beiden Fixiermittel 14, 15 können parallel zueinander ausgerichtet oder zueinander um 90° verdreht angeordnet werden. In der entspannten Öffnungsstellung ist zumindest ein geringfügiger Abstand zwischen dem Verzahnungselement 144 und der Oberfläche 16, 17 ausgebildet. In einer gespannten Sperrstellung wird zwischen dem Verstellelement 135 und dem Mantelrohr 10 und/oder der Halterung 5 ein punkt- oder linienförmiger Reibschluß und somit eine Fixierung einer eingestellten Relativlage zwischen der Lenkwelle 2 und der Halterung 5 bewirkt.

Ist eine eingestellte Relativlage zwischen zweier Teile 42, 71 zu fixieren, so wird durch die Betätigung des Hebels i49 eine Verstellung der relativ zueinander beweglichen Verstellelemente 135 der Fixiermittel 14 und/oder 15 in Längserstreckung des Spannelementes 24 ausgelöst und legt einen durch den Abstand zwischen der Oberfläche 16; 17 und den Verzahnungselementen 144 definierten Hub zurück und werden die Verstellelemente 135 in zur Angriffsoberfläche der Halterung 5 und/oder des Mantelrohres 10 senkrechter Richtung zugestellt und gegen diese kraftschlüssig angepreßt. In der fixierenden Sperrstellung sind das Mantelrohr 10 und das Profilstück 8 zur Halterung 5 positioniert gehalten und/oder zumindest geringfügig verspannt. Wird der Hebel 149 entgegen der die Sperrstellung bewirkende Richtung verschwenkt, erfolgt die Verstellung der Verstellelemente 135 in von den Angriffsoberflächen entgegengesetzter Richtung und die Aufhebung der Sperrstellung.

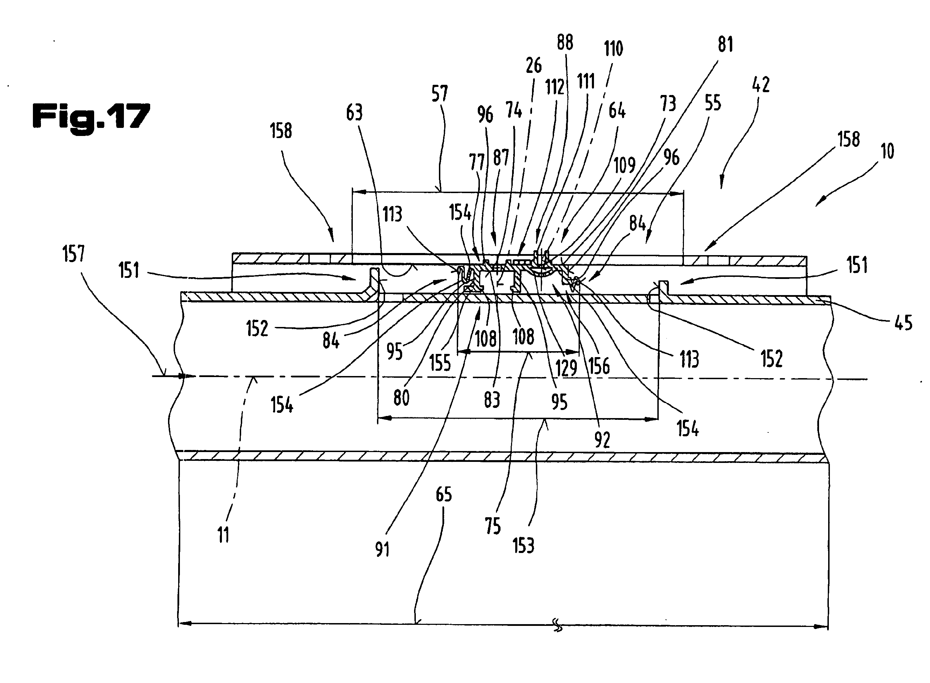

In der Fig. 17 ist der das Mantelrohr 10 bildende Teil 42 und das diesem zugeordnete Führungselement 64 im Längsschnitt und in vereinfachter Darstellung gezeigt. Das Mantelrohr 10 weist den ersten mit der Ausnehmung 55 versehenen, bevorzugt mehreckig ausgebildeten, Mantelrohrteil 45 auf, der den weiteren kreiszylindrischen Mantelrohrteil 45 zumindest bereichsweise überdeckt und der mit diesem zweckmäßig unlösbar verbunden ist. Die Ausnehmung 55 verläuft parallel zu der Längsachse 11 der in dieser Fig. nicht weiters dargestellten Lenkwelle 2 und erstreckt sich zumindest über einen Teil der Länge 65 des Mantelrohres 10. Zwei am weiteren Mantelrohrteil 45 angeordnete, in Richtung der Längsachse 11 voneinander distanzierte und in Richtung der am ersten Mantelrohrteil 45 ausgebildeten ebenen Führungsfläche 63 vorragende Laschen 151 sind etwa senkrecht auf die Längsachse 11 ausgerichtet. Einander zugewandte Anschlagflächen 152 begrenzen einen maximal möglichen Verstellweg 153 des zwischen den übereinander angeordneten Mantelrohrteilen 45 und zwischen den Laschen 151 angeordneten Führungselemente 64. Die Laschen 151 sind bevorzugt im Bereich der gegenüberliegenden Endlagen der Ausnehmung 55 angeordnet und am weiteren Mantelrohrteil 45 einstückig angeformt. Diese weitere bevorzugte Ausführungsvariante des Führungselementes 64 zeigt den durch zwei Breitseitenflächen 78,79 - wie diese nicht eingetragen sind - zwei Stirnseitenflächen 80, 81 und zwei Längsseitenflächen 82, 73 begrenzten, langgestreckten Grundkörper 77, wovon zumindest ein Teilbereich der der ebenen Führungsfläche 63 am Mantelrohr 10 zugewandten Längsseitenfläche 73 als Gleit- bzw. Anlagefläche 83 ausgebildet ist. Der Grundkörper 77 weist daher im wesentlichen einen etwa streifenförmigen Querschnitt auf und ist mit zumindest einer Aussparung 74 zur Aufnahme des nicht weiters dargestellten Spannelementes 24 versehen. Dem Grundkörper 77 ist im Längsverlauf, bevorzugt an den gegenüberliegenden Stirnseitenflächen 80, 81, jeweils ein elastisch verformbares, rückstellbares Anschlag- bzw. Dämpfungselement 84 zugeordnet. Die Anschlag- bzw. Dämpfungselemente 84 sind derart angeordnet, daß sie die Stirnseitenflächen 80, 81 des Grundkörpers 77 überragen und weisen diese einen in etwa meanderförmigen Querschnitt auf. Die erfindungsgemäßen Anschlag- bzw. Dämpfungselemente 84 setzen sich aus mehreren geneigt zueinander verlaufenden Wandteilen 154 zusammen, wovon zumindest einer der Wandteile 154 elastisch verstellbar ausgebildet ist. Je nach Erfordernis der aufzunehmenden Anschlagenergien in Folge eines Verstellvorganges mittels Handkraft, ist die Anzahl der hintereinander angeordneten geneigten Wandteile 154 auszulegen, so daß im einfachsten Fall es möglich ist, ausschließlich einen unmittelbar an der Stirnseitenfläche 80, 81 vorspringenden Wandteil 154, der als Anschlag- bzw. Dämpfungselement 84 fungiert, auszubilden oder anzuordnen. Durch die unmittelbare einstückige Anformung der Anschlag- bzw. Dämpfungselemente 84 an dem Grundkörper 77 kann eine erhebliche Reduzierung der Anzahl der Einzelteile, die unterschiedliche Funktionen ausüben, erreicht werden, wodurch nun auch die Möglichkeit geschaffen wird, in weitestgehend vollautomatisierten Montageautomaten derartige Fixiereinrichtungen zusammenzustellen.

Die in Längsrichtung des Führungselementes 64 voneinander distanzierten, in die Ausnehmung 55; 22 des Teiles 42; 71 vorragenden Führungsvorrichtungen 87, 88 sowie die zumindest bereichsweise zur Anlage bestimmten ebenen Führungsfläche und Längsseitenfläche 63, 73 des Teiles 42; 71 und des Führungselementes 64 ermöglichen die Führung des Führungselementes 64 in zwei Raumrichtungen. Die erste Raumrichtung verläuft parallel und die zweite Raumrichtung senkrecht zur Längsmittelachse 26 des Spannelementes 24. Die Längsmittelachsen 26 und 110 des nicht weiters dargestellten Spannelementes 24 und Spielbegrenzungselementes 102 verlaufen parallel zueinander und senkrecht zu der Längsachse 11 der Lenkwelle.

Wie bereits oben beschrieben, weist das Führungselement 64 zumindest eine, zweckmäßig mehrere, voneinander getrennte Aufnahmeelemente 91, 92 auf, die einerseits zur teilweisen Aufnahme des nicht weiters dargestellten Fixiermittels 15 und andererseits zur Aufnahme des nicht weiters dargestellten Spielbegrenzungselementes 102 ausgebildet sind. Die sich ausgehend von der der Längsseitenfläche 73 in Richtung des weiteren Mantelrohrteiles 45 erstrekkenden Haltearme 95 begrenzen das Aufnahmeelement 91; 92. Die Haltearme 95 weisen an ihrem freien Endbereich die in Richtung des Aufnahmeelementes 91 aufeinander zulaufenden Vorsprünge 108 auf, an dessen Halteflächen 107 sich der Kopf des nicht weiters dargestellten Spannelementes 24 bereichsweise abstützt. Das an der Stirnseitenfläche 80 einstückig angeformte Anschlag- bzw. Dämpfungselement 84 ist zwischen dem freien Ende des Haltearmes 95 und der Längsseitenfläche 73 angeordnet. Ein den Federweg des elastisch nachgiebigen Anschlag- bzw. Dämpfungselementes 84 begrenzender Fortsatz 155 ist bevorzugt im Bereich des freien Endes des Haltearmes 95 angeordnet und überragt die Stirnseitenfläche 80. Die zu der Stirnseitenfläche 80 benachbarte Führungsvorrichtung 87 ist zwischen den einander gegenüberliegenden und voneinander distanzierten Haltearmen 95 an der Längsseitenfläche 73 angeordnet und ragt in die von dem ersten Mantelrohrteil 45 des Teiles 42 ausgebildete Ausnehmung 55 vor, so daß das Führungselement 64 entlang dieser Ausnehmung 55 in eine dritte parallel zur Längsachse 11 verlaufende Raumrichtung geführt ist.

Das weitere Aufnahmeelement 92 ist durch den Haltearm 95 des ersten Aufnahmeelementes 91 und eine bevorzugt senkrecht auf den Grundkörper 77 ausgerichtete Wandung 156 begrenzt und ist an einem der Längsseitenfläche 73 gegenüberliegenden freien Endbereich mit dem elastisch nachgiebigen Anschlag- bzw. Dämpfungselement 84 versehen, das wie bereits oben beschrieben, etwa meanderförmig ausgebildet ist. Wie weiters dargestellt, ist die weitere Führungsvorrichtung 88 zwischen dem Haltearm 95 und der zu diesem distanziert angeordneten Wandung 156 an der Längsseitenfläche 73 angeordnet. Die Führungsvorrichtung 88 ist, wie bereits beschrieben, mit dem Führungsteil 111 ausgestattet. Zwischen den Führungsvorrichtungen 87, 88 ist ebenfalls die bereits beschriebene Arretiervorrichtung 112 angeordnet. An der Unterseite der Basis 96 ist das mit einem kreisbogenförmigen, der Basis 96 zugewandt, einen konvexen Verlauf aufweisende Sicherungselement 129 angeordnet. Zur Anbringung des nicht weiters dargestellten Spielbegrenzungselementes 102, insbesondere der Schraubenmutteranordnung, ist in dem Sicherungselement 129, dem Grundkörper 77 und der Führungsvorrichtung 88 die Aussparung 109 ausgebildet. Das Anschlag- bzw. Dämpfungselement 84 ist an dem Grundkörper 77 und/oder der Führungsvorrichtung 87; 88 und/oder dem Aufnahmeelement 91; 92 einstückig angeformt oder eingesetzt oder wird dieses durch den Grundkörper 77 und/oder der Führungsvorrichtung 87, 88 und/oder dem Aufnahmeelement 91; 92 selbst ausgebildet. Wie weiters aus der Fig. 17 ersichtlich, sind zwei Aufnahmeelemente 91, 92 unmittelbar in Längserstreckung des Führungselementes 64 hintereinander angeordnet und ist der Grundkörper 77 jeweils durch die Basis 96 der beiden Aufnahmeelemente 91, 92 gebildet.

Wie in dieser bevorzugten Ausführungsvariante gezeigt, ist die einer Frontseite eines Fahrzeuges benachbarte Lasche 151 höher herausgestellt, als die einem Lenkrad des Fahrzeuges benachbarte Lasche 151. Um entsprechende Festigkeiten der höher herausgestellten Lasche 151 zu erreichen, ist eine in Richtung der Längsachse 11 verlaufende Versteifungsrippe in der Lasche 151 ausgeformt. Die Laschen 151 an sich können im Stanz- und/oder Biegeverfahren einteilig aus dem Mantelrohrteil 45 hergestellt werden.

Zumindest ein Teilbereich der einander zugewandten Flächen der Laschen 151 sind als Anschlagflächen 152 ausgebildet. Die Anschlag- bzw. Dämpfungselemente 84 sind derart ausgebildet, daß ihre Anschlagflächen 113 mit den Anschlagflächen 152 der Laschen 151 des weiteren Mantelrohrteiles 45 korrespondieren. Die senkrecht auf die Längsachse 11 ausgerichteten Anschlagflächen 113 und 152 verlaufen parallel zueinander.

Eine derartige konstruktive Ausgestaltung der herausgestellten Laschen 151 ermöglichen im Zusammenwirken mit dem Führungselement 64 das Absorbieren von in Richtung der oder schräg zur Längsachse 11 der Lenkwelle 2 einwirkenden Energien - gemäß Pfeil 157 - infolge eines Fahrzeugaufpralles und/oder einem Aufprall des Fahrers auf das Lenkrad, indem zumindest ein Teil der erzeugten kinetischen Energie bzw. der Stoßenergie in Verformungsenergie durch Deformation der ersten Lasche 151 umgewandelt wird. Die Energieeinwirkung - gemäß Pfeil 157 - bewirkt eine Verschiebung des Mantelrohres 10 in zur Längsachse 11 paralleler Richtung und/oder gegebenenfalls senkrechter Richtung , wobei das nicht weiters dargestellte Spannelement 24 und Profilstück 8 über die Halterung 5 in einer fixierten Sperrstellung, im wesentlichen positioniert, gehalten sind. Die an dem an der Stirnseitenfläche 80 des Führungselementes 64 angeordneten Anschlag- bzw. Dämpfungselement 84 aufprallende erste Lasche 151 kann zum bereichsweisen Bruch des Führungselementes 64 führen, wobei der Kopf des Spannelementes 24 und die Lasche 151 derart zueinander ausgerichtet bzw. angeordnet sind, daß der Kopf nach dem Bruch des Führungselementes 64 das Umbiegen der Lasche 151 bewirkt.

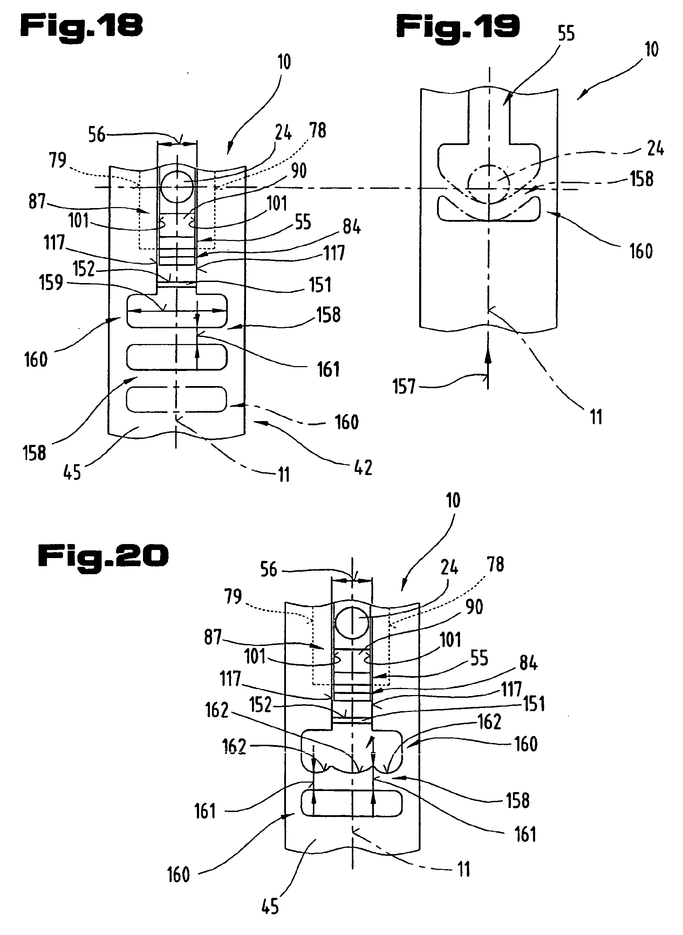

Ist es erforderlich, einen höheren Anteil an Aufprallenergie über das Mantelrohr 10 zu absorbieren, ist zumindest eine Deformationsanordnung am Mantelrohr 10 angeordnet und/oder durch dieses gebildet. Zweckmäßig wird hierfür an zumindest eine der Endlagen der Ausnehmung 55 des ersten Mantelrohrteiles 45 die energieabsorbierende, plastisch verformbare Deformationsanordnung, insbesondere zumindest ein Verformungsteil 158 vorgesehen. Die Deformationsanordnung bzw. der Verformungsteil 158 ist vom Mantelrohr 10 ausgebildet. Durch diese Ausbildung ist es nunmehr möglich, eine Kombination der Energieabsorption der plastisch verformbaren Lasche 151 und einem plastisch verformbaren Verformungsteil 158 vorzusehen. Natürlich besteht auch die Möglichkeit, daß ausschließlich der Verformungsteil 158 oder ausschließlich eine verformbare Lasche 151 vorgesehen wird. Die Funktionsweise der Energieabsorbierung durch den Verformungsteil 158 wird anhand unterschicdlicher Ausführungsbeispiele in den nachfolgenden Fig. 18 bis 22 erläutert.

Um diese gewissermaßen serielle Energieabsorption der Lasche 151 und dem Verformungsteil 158 zu ermöglichen, ist der durch die Laschen 151 begrenzte Verstellweg 153 kleiner bemessen, als die Länge 57 der Ausnehmung 55 im ersten Mantelrohrteil 45.

Es sei an dieser Stelle darauf hingewiesen, daß der weitere Mantelrohrteil 45 mehrteilig ausgebildet ist und die Laschen 151 einteilig angeformt sind. Natürlich kann der weitere Mantelrohrteil 45 auch einteilig ausgebildet werden, wobei die Laschen 151 über ein Verbindungselement an diesem befestigt werden. Weiters ist das vorliegende Mantelrohr 10 nur als beispielhafte Ausführung zu sehen und dieses kann auch durch ein Profil mit offenem Querschnitt, insbesondere einem C-förmigen Profil, gebildet werden.

In den gemeinsam beschriebenen Fig. 18 bis 22 ist ein Teilbereich des Mantelrohres 10 mit unterschiedlichen Ausführungsformen des Verformungsteiles 158 in Draufsicht gezeigt. Der Einfachheit halber wird die Anordnung des Verformungsteiles 158 am Mantelrohr 10 bzw. dem Teil 42 gezeigt und kann gleichermaßen im Bereich der Ausnehmung 22 der Halterung 5 und der Ausnehmung 60 des weiteren Mantelrohrteiles 45 - gemäß der Ausbildung in Fig. 4 - vorgesehen werden. Ist ein Verformungsteil 158 vorgesehen, weist die Ausnehmung 22; 55; 60 in ihren Endlage einen in etwa T-förmigen Verlauf auf und ist eine Breite 159 einer Freistellung 160 größer bemessen, als die Breite 56 des Verstellbereiches der Ausnehmung 55. Diese den Verstellbereich der Ausnehmung 55 nachgeordnete Freistellung 160 ist über den Verformungsteil 158 in zwei Materialdurchtrennungen bzw. Bereiche aufgeteilt und bildet einen den Verstellbereich nachgeordneten, energieabsorbierenden Verformungsbereich aus. Dieser zwischen den beiden Materialdurchtrennungen sich quer zur Längsrichtung der Ausnehmung 55 erstreckende streifenförmige Steg bildet den Verformungsteil 158. Die infolge eines Fahrzeugaufpralles hervorgerufene Relativverlagerung des Mantelrohres 10 gegenüber dem über das positioniert fixierte Führungselement 64 bewirkt eine gemäß den strichpunktierten Linien in der Fig. 19 dargestellte Materialverdrängung. Während der Materialverdrängung wird kinetische Energie absorbiert, wobei der Anteil der zu absorbierenden Energie durch Kaskadierung, wie in der Fig. 18 in strichpunktierten Linien dargestellt, mehrerer hintereinander angeordnete Verformungsteile 158, die durch die Herstellung einer weiteren Materialdurchtrennung gebildet werden, beeinflußt werden kann. Bevorzugt erfolgt die Herstellung der Materialdurchtrennungen im Stanzverfahren, so daß eine rasche und kostengünstige Fertigung der Teile 42; 71 erfolgen kann. Die Materialdurchtrennungen sind im einfachsten Fall, wie in Fig. 18 dargestellt, etwa rechteckförmig ausgebildet.

Eine Stärke 161 des Verformungsteiles 158 ist in Abhängigkeit von den Materialeigenschaften und von der Höhe des zu absorbierenden Energieanteiles auszulegen.

Aus der Fig. 20 ist eine andere Ausbildung des Verformungsteiles 158 gezeigt, der in Richtung seiner quer zur Längsachse 11 verlaufenden Richtung unterschiedliche, das Spannungs- und Dehnungsverhalten des Verformungsteiles 158 beeinflussende Stärken 161 aufweist. Wie aus dieser Fig. ersichtlich, sind an einer dem Spannelement 24 zugekehrten Seitenfläche mehrere, bevorzugt drei Rückziehungen 162 angeordnet, wovon die mittlere Rückziehung 162 einen größeren Radius als die Radien der diese begrenzende weiteren Rückziehungen 62 aufweist. Zweckmäßig ist der Radius der mittleren Rückziehung 162 zumindest geringfügig größer als die Breite 56 der Ausnehmung 55 im Verstellbereich bemessen. Die weitere Materialdurchtrennung bzw. der weitere Bereich der Freistellung 160 ist wiederum rechteckförmig ausgebildet. Durch eine derartige Konfiguration des Verformungsteiles 158 besteht nunmehr die Möglichkeit, daß das Spannungs- und Dehnungsverhalten während eines Fahrzeugaufpralles maßgeblich beeinflußt und der Anteil der zu absorbierenden Energie wesentlich erhöht werden kann. Diese Ausführungsvariante zeichnet sich vor allem darin aus, daß durch die kreisbogenförmige mittlere Rückziehung 162 und dem zwischen dieser und den weiteren Rückziehungen 162 verbleibenden Material, eine Einschnürung während des Verformens des Verformungsteiles 158 im wesentlichen vermieden wird.

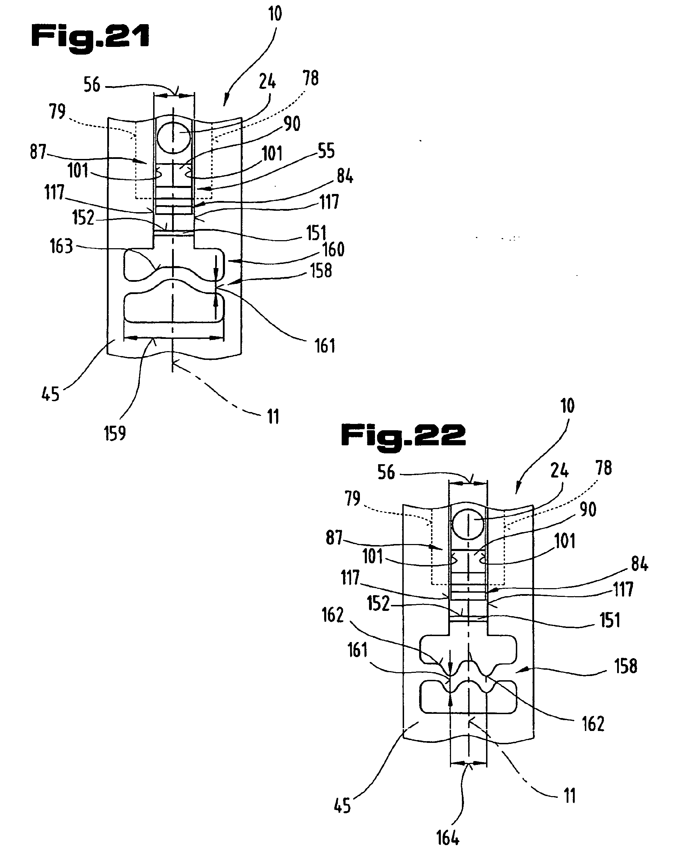

Die Fig. 21 zeigt eine andere Ausführungsform des Verformungsteiles 158, der in seiner Längenabmessung größer bemessen ist als die Breite 159 der Freistellung 160. Der streifenförmige Verformungsteil 158 weist zumindest über einen Teil seiner Länge eine dem Spannelement 24 zugekehrte Erhebung 163 auf. Die Stärke 161 des Verformungsteiles 158 verläuft über dessen Länge konstant. Natürlich besteht auch die Möglichkeit, daß eine dem Spannelement 24 abgewandte Seitenfläche des Verformungsteiles 158 quer und linear zur Längsachse 11 verläuft und wiederum den etwa rechteckförmigen, weiteren Bereich bzw. weitere Materialdurchtrennung bildet.

Eine weitere Ausführungsvariante des Verformungsteiles 158 ist in der Fig. 22 dargestellt. Der in etwa meanderförmige Verformungsteil 158 weist über seine gesamte Länge eine gleichbleibende Stärke 161 auf, wobei die dem Spannelement 24 zugekehrte Erhebung 163 von den beidseits zur Erhebung 163 angeordnete Rückziehungen 162 begrenzt ist. Ein zwischen den Wendepunkten der Rückziehungen 162 bemessener Abstand 164 ist bevorzugt gleich bemessen, wie die Breite 56 der Ausnehmung 55. Die dem Spannelement 24 zugekehrte Seitenfläche und abgekehrte Seitenfläche des Verformungsteiles 158 verlaufen parallel zueinander, wodurch sich eine konstante Stärke 161 des Verformungsteiles 158 ergibt. Zwischen den Wendepunkten der Rückziehungen 162 ist die etwa kreisbogenförmige Erhebung 163 ausgebildet. Auch diese Ausführungsvariante zeichnet sich vor allem wegen ihrer Übertragung hoher Kräfte bzw. Energien aus, da selbst bei einer Verformung infolge eines Fahrzeugaufpralles keine zu einer möglichen Bruchbildung des Verformungsteiles 158 führende Spannungsspitzen hervorgerufen werden. Weiters ist von Vorteil, daß durch die Materialverdrängung in zur Ausnehmung 55 abgewandter Richtung eine Gleitfläche an der dem Spannelement 24 zugekehrten Seitenfläche des Verformungsteiles 158 während der Relativverlagerung für das Spannelement 24 geschaffen wird. Dadurch ist selbst während des Verformungsvorganges bei einem Fahrzeugaufprall und Verschieben des Mantelrohres 10 gegenüber dem Spannelement 24 eine Führung der nicht weiters dargestellten Lenkwelle 2 und dem Mantelrohr 10 in zur Längsachse 11 paralleler Richtung vorgegeben und wird ein Hochsteigen der Lenkwelle 2 weitestgehend unterbunden.

Abschließend sei noch darauf hingewiesen, daß die in der Fig. 1 und Fig. 2 gezeigte Lenkwellenverstelleinheit 1 für Kraftfahrzeuge, z.B. LKW, PKW, Landwirtschaftsfahrzeuge, etc., nur beispielhaften Charakter hat und kann das erfindungsgemäße Führungselement 64 vielmehr in allen aus dem Stand der Technik bekannten Fixiereinrichtungen 4 einer Lenkwellenverstelleinheiten 1, d.h. auch in jenen, die mit ausschließlich nur in einer Raumrichtung, z.B. Länge, verstellbarer Lenkwelle 2 ausgebildet sind, integriert werden. Ebenfalls ist auch der Aufbau der Verstell- und Fixiereinrichtung 3, 4 mit deren einzelnen Bauteilen, z.B. Mantelrohr 10, Halterung 5, etc., nur als Beispiel anzusehen.

Der Ordnung halber sei abschließend darauf hingewiesen, daß zum besseren Verständnis des Aufbaus der Lenkwellenverstelleinheit sowie des Führungselementes diese bzw. deren Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

Vor allem können die einzelnen in den Fig. 1, 2, 3, 4; 5; 6, 7; 8; 9; 10; 11; 12; 13, 14, 15, 16; 17; 18, 19, 20, 21, 22 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

### Bezugszeichenaufstellung

- 1: Lenkwellenverstelleinheit
- 2: Lenkwelle
- 3: Verstelleinrichtung
- 4: Fixiereinrichtung
- 5: Halterung

- 6: Karosserie
- 7: Schwenkachse
- 8: Profilstück
- 9: Führungselement
- 10: Mantelrohr

- 11: Längsachse
- 12: Doppelpfeil
- 13: Doppelpfeil
- 14: Fixiermittel
- 15: Fixiermittel

- 16: Oberfläche
- 17: Oberfläche
- 18: Basis
- 19: Schenkel
- 20: Länge

- 21: Breite
- 22: Ausnehmung
- 23: Durchmesser
- 24: Spannelement
- 25: Verstellweg

- 26: Längsmittelachse
- 27: Symmetrieachse
- 28: Abstand
- 29: ---
- 30: Seitenschenkel

- 31: Außenseite
- 32: Basis
- 33: Innenseite
- 34: Winkel
- 35: Endteil

- 36: Zwischenteil
- 37: Führungsvorrichtung
- 38: Stütz- und/oder Führungsfläche
- 39: ---
- 40: Bohrung

- 41: Durchmesser
- 42: Teil (Mantelrohr)
- 43: Verbindungselement
- 44: Verbindungsbereich
- 45: Mantelrohrteil

- 46: Basis
- 47: Seitenschenkel
- 48: Höhe
- 49: Wandteil
- 50: Winkel

- 51: Endteil
- 52: Außenmaß
- 53: Außendurchmesser
- 54: Formrohr
- 55: Ausnehmung

- 56: Breite
- 57: Länge
- 58: Breite
- 59: Länge
- 60: Ausnehmung

- 61: Aussparung
- 62: Befestigungslasche
- 63: Führungsfläche
- 64: Führungselement
- 65: Länge

- 66: Länge
- 67: Länge
- 68: Endbereich
- 69: Lagerelement
- 70: ---

- 71: Teil (Halterung)
- 72: Anschlagfläche
- 73: Längsseitenfläche (Grundkörper)
- 74: Aussparung
- 75: Führungselementlänge

- 76: Verstellweg
- 77: Grundkörper
- 78: Breitseitenfläche
- 79: Breitseitenfläche
- 80: Stirnseitenfläche

- 81: Stirnseitenfläche
- 82: Längsseitenfläche
- 83: Gleit- bzw. Anlagefläche
- 84: Anschlag- bzw. Dämpfungselement
- 85: Endbereich

- 86: Endbereich
- 87: Führungsvorrichtung
- 88: Führungsvorrichtung
- 89: Führungsblock
- 90: Führungsblock

- 91: Aufnahmeelement
- 92: Aufnahmeelement
- 93: Breite (Aufnahmeelement)
- 94: Breite (Grundkörper)
- 95: Haltearm

- 96: Basis
- 97: Zwischenbereich
- 98: Wandstärke
- 99: Breite (Führungsvorrichtung)
- 100: Längsseitenbereich

- 101: Seitenführungsfläche
- 102: Spielbegrenzungselement
- 103: Verbindungssteg
- 104: Zunge
- 105: Einschnürungsbereich

- 106: Trennfuge
- 107: Haltefläche
- 108: Vorsprung
- 109: Aussparung
- 110: Längsmittelachse

- 111: Führungsteil
- 112: Arretiervorrichtung
- 113: Anschlagfläche
- 114: Doppelpfeil
- 115: Teilbereich

- 116: Endanschlag
- 117: Führungsfläche
- 118: Verformungssteg
- 119: Freiraum
- 120: Pfeil

- 121: Kunststoffschichte
- 122: Einsatzteil
- 123: Vorsprung
- 124: Randsteg
- 125: Freiraumhöhe

- 126: Vorsprunghöhe
- 127: Wandstärke
- 128: Kopf
- 129: Sicherungselement
- 130: Flanke

- 131: Anschlagelement
- 132: Abstand
- 133: Kopfhöhe
- 134: Rückstellelement
- 135: Verstellelement

- 136: Klemmelement
- 137: Aussparung
- 138: Länge
- 139: Weite
- 140: Breite

- 141: Innenseitenfläche
- 142: Basis
- 143: Schenkel
- 144: Verzahnungselement
- 145: Verstellelementlänge

- 146: Aufnahmebereich
- 147: Öffnungsweite
- 148: Abstand
- 149: Hebel
- 150: Nockenscheibe

- 151: Lasche
- 152: Anschlagfläche
- 153: Verstellweg
- 154: Wandteil
- 155: Fortsatz

- 156: Wandung
- 157: Pfeil
- 158: Verformungsteil
- 159: Breite
- 160: Freistellung

- 161: Stärke
- 162: Rückziehung
- 163: Erhebung
- 164: Abstand

## Patentansprüche

1. Führungselement (64) einer Fixiereinrichtung (4) für eine Lenkwelle (2), mit einem länglichen Grundkörper (77), von welchem eine Seitenfläche als Seitenführungsfläche (101) oder Längsseitenfläche (73) zur bereichsweisen Anlage an wenigstens einer Führungsfläche (117, 63) ausgebildet ist und mit einer Aussparung (74) für den zur Längsseitenfläche (73) senkrechten Durchtritt eines Spannelementes (24) versehen ist, wobei der Grundkörper (77) bevorzugt an seinen voneinander abgewandten Endbereichen (85, 86) jeweils zumindest ein elastisch verformbares, rückstellbares Anschlag- bzw. Dämpfungselement (84) aufweist, **dadurch gekennzeichnet, daß** der Grundkörper (77) zumindest ein Aufnahmeelement (91) aufweist, welches wenigstens zwei in einem Abstand voneinander angeordnete, etwa senkrecht zur Längsseitenfläche (73) des Grundkörpers (77) ausgerichtete und diese überragende Haltearme (95) umfaßt.

2. Führungselement nach Anspruch 1, **dadurch gekennzeichnet, daß** das zumindest eine Aufnahmeelement (91) und der Grundkörper (77) einstückig ausgebildet ist.

3. Führungselement nach Anspruch 1, **dadurch gekennzeichnet, daß** das zumindest eine Aufnahmeelement (91) einen eigenen Bauteil bildet, der mit dem Grundkörper (77) verbunden ist.

4. Führungselement nach einem der Ansprüche 1 bis 3, **dadurch gekennzeichnet, daß** sich das zumindest eine Aufnahmeelement (91) nur über einen Teil der Führungselementlänge (75) erstreckt und im Querschnitt bevorzugt C-förmig ausgebildet ist.

5. Führungselement nach einem der Ansprüche 1 bis 4, **dadurch gekennzeichnet, daß** vom Aufnahmeelement (91) zwischen den Haltearmen (95) Teile der Fixiereinrichtung (4), insbesondere das Spannelement (24) und ein Rückstellelement (134), positioniert gehalten sind.

6. Führungselement nach einem der Ansprüche 1 bis 5, **dadurch gekennzeichnet, daß** sich die Haltearme (95) ausgehend von der Längsseitenfläche (73) in eine erste Richtung erstrecken, zwischen denen eine diese verbindende Basis (96) angeordnet ist.

7. Führungselement nach einem der Ansprüche 1 bis 6, **dadurch gekennzeichnet, daß** die Haltearme (95) in einem Abstand zueinander angeordnet sind und quer zur Längserstre ckung des Grundkörpers (77) verlaufen.

8. Führungselement nach einem der Ansprüche 1 bis 6, **dadurch gekennzeichnet, daß** die Haltearme (95) in einem Abstand zueinander angeordnet sind und in Längserstreckung des Grundkörpers (77) verlaufen.

9. Führungselement nach Anspruch 1, **dadurch gekennzeichnet, daß** mit dem Grundkörper (77) zumindest eine Führungsvorrichtung (87) zumindest zur Seitenführung des Fühnmgselementes (64) entlang einer Führungsfläche (117) verbunden ist.

10. Führungselement nach Anspruch 9, **dadurch gekennzeichnet, daß** die Fühnmgsvorrichtung (B7) durch den Grundkörper (77) gebildet ist.

11. Führungselement nach Anspruch 9, **dadurch gekennzeichnet, daß** die Führungsvorrichtung (87) durch auf einer den Haltearmen (95) gegenüberliegenden Seite angeordnete, prismatische Führungsblöcke (89, 90) gebildet ist und daß die Fühnmgsvorrichtung (87) in Richtung der Längserstreckung des Grundkörpers (77) verläuft.

12. Führungselement nach Anspruch 11, **dadurch gekennzeichnet, daß** die Führungsvorrichtung (87) die Längsseitenfläche (73) überragt und eine Höhe senkrecht zur Längsseitenfläche (73) aufweist, die so bemessen ist, daß die Führungsvorrichtung (87) zumindest bereichsweise in eine in dem Teil (42, 71) anzuordnende, schlitzartige Ausnehmung (55, 22) vorragt, wenn das Führungselement (64) am Teil (42, 71) angeordnet ist

13. Führungselement nach einem der Ansprüche 1 bis 12, **dadurch gekennzeichnet, daß** am Aufnahmeelement (91) die Führungsvorrichtung (87) angeordnet und mit der Basis (96) einstückig verbunden ist.

14. Führungselement nach Anspruch 13, **dadurch gekennzeichnet, daß** die Führungsvorrichtung (87) und das Aufnahmeelement (91) um zumindest eine Wandstärke (98) der Basis (96) voneinander getrennt und unmittelbar übereinander angeordnet sind.

15. Führungselement nach einem der Ansprüche 6 bis 14, **dadurch gekennzeichnet, daß** der Grundkörper (77) durch die Basis (96) gebildet ist

16. Führungselement nach Anspruch 11, **dadurch gekennzeichnet, daß** die Führungsblöcke (89, 90) eine zwischen zwei in Längsrichtung parallel zueinander und senkrecht auf die Längsseitenfläche (73) verlaufenden Seitenfiihrungsflächen (101) bemessene Breite (99) aufweist, die vorzugsweise einer Breite (94) des Grundkörpers (77) entspricht.

17. Führungselement nach Anspruch 11, **dadurch gekennzeichnet, daß** ein Teilbereich der Längsseitenfläche (73) der Basis (96), insbesondere beidseitig die Führungsblöcke (89, 90) begrenzende Längsrandbereiche (100) eine Gleit- bzw. Anlagefläche (83) bilden und der Gnmdkörper (77) in seiner Breite (94) um Breiten der Längsrandbereiche (100) seitlich überragt ist

18. Führungselement nach Anspruch 1, **dadurch gekennzeichnet, daß** zusätzlich zum ersten Aufnahmeelement (91) am Grundkörper (77) ein weiteres Aufnahmeelement (92) vorgesehen ist, wobei das weitere Aufnahmeelement (92) über den Grundkörper (77) mit dem ersten Aufnahmeelement (91) verbunden ist.

19. Fühnmgselement nach Anspruch 18, **dadurch gekennzeichnet, daß** im weiteren Aufnahmeelement (92) zwischen den Haltearmen (9.5) zumindest ein Spielbegrenzungselement (102) angeordnet ist.

20. Führungselement nach einem der Ansprüche 1 bis 19, **dadurch gekennzeichnet, daß** das Aumahmeelement (91, 92) jeweils mit einer die Basis (96) und die Fühnmgsblöcke (89, 90) durchbrechenden Aussparung (74) für das Spannelement (24) und das Spielbegrenzungselement (102) versehen ist.

21. Führungselement nach einem der Ansprüche 1 bis 20, **dadurch gekennzeichnet, daß** mit dem Grundkörper (77) eine zur ersten Führungsvorrichtung (87) im Abstand angeordnete, weitere Führungsvorrichtung (88) verbunden ist, die mit einem in zur Längsseitenflä che (73) senkrechter Richtung ausgerichteten und die Ausnehmung (22, 55) des Teiles (71, 42) durchsetzenden Führungsteil (111) für das Spielbegrenzungselement (102) versehen ist.

22. Führungselement nach Anspruch 21, **dadurch gekennzeichnet, daß** der Führungsteil (111) durch zumindest zwei voneinander getrennte halbschalenförmige Hülsenteile gebildet ist.

23. Führungselement nach einem der Ansprüche 1 bis 20, **dadurch gekennzeichnet, daß** die Haltearme (95) an ihren freien Endbereichen mit aufeinander zugerichteten, abgewinkelten und zweckmäßig sich über die gesamte Breite (93) des Aufnahmeelementes (91, 92) erstreckenden Halteflächen (107) bildenden Vorsprüngen (108) für das Abstützen des Spannelementes (24) oder des Spielbegrenzungselementes (102) versehen ist.

24. Führungselement nach Anspruch 1 oder 23, **dadurch gekennzeichnet, daß** zumindest einer der Haltearme (95) in einer zu seiner Längserstreckung senkrechten Achse, elastisch verformbar und rückstellbar ausgebildet ist.

25. Führungselement nach Anspruch 24, **dadurch gekennzeichnet, daß** eine Wandstärke der Haltearme (95) ausgehend von der Basis (96) in Richtung der Vorsprünge (108) mit zunehmenden Abstand konisch verjüngend ausgebildet ist.

26. Führungselement nach einem der Ansprüche 6 bis 25, **dadurch** gekenazeichnet, daß an einer Innenseite der Basis (96) zwischen den Haltearmen (95) zumindest ein federelastisch wirkendes, streifenartiges Sicherungselement (129) angeordnet ist.

27. Führungselement nach Anspruch 26, **dadurch gekennzeichnet, daß** das Sichenmgselement (129) einen gekrünnmten, insbesondere zur Basis (96) zugewandt, konvexen Verlauf aufweist.

28. Führungselement nach Anspruch 1, 9, 18 oder 21, **dadurch gekennzeichnet, daß** die Anschlag- bzw. Dämpfungselemente (84) durch einen Teilbereich des Grundkörpers (77) und/ oder der Führungsvorrichtung (87, 88) und/oder der Aufnahmeelemente (91, 92) gebildet sind.

29. Führungselement nach Anspruch 28, **dadurch gekennzeichnet, daß** die Anschlag- bzw. Dämpfungselemente (84) zum verbleibenden Bereich des Grundkörpers (77) gleiche oder andere Eigenschaften in bezug auf Elastizität, Festigkeit etc. aufweisen.

30. Führungselement nach Anspruch 1, 9, 18 oder 21, **dadurch gekennzeichnet, daß** die Anschlag- bzw. Dämpfungselemente (84) in einem Teilbereich des Grundkörpers (77) und/oder des Führungsblockes (89, 90) und/oder des Aufnahmeelementes (91, 92) angeformt oder eingesetzt sind.

31. Führungselement nach einem der Ansprüche 1, 28 bis 30, **dadurch gekennzeichnet, daß** die Anschlag- bzw. Dämpfungselemente (84) ein progressives Belastungsverhalten aufweisen.

32. Führungselement nach Anspruch 30, **dadurch gekennzeichnet, daß** die Anschlag-bzw. Dämpfungselemente (84) an dem Grundkörper (77) und/oder Führungsblock (89, 90) und/oder Aufnahmeelement (91, 92) einstückig angeformt sind und zumindest eines der Anschlag- bzw. Dämpfungselemente (84) meanderförmig ist und zumindest einen an einer Stirnseitenfläche (80, 81) des Grundkörpers (77) vorspringenden Wandteil (154) aufweist, der elastisch verstellbar ausgebildet ist.

33. Führungselement nach einem der Ansprüche 1 bis 32, **dadurch gekennzeichnet, daß** wenigstens eines der Anschlag- bzw. Dämpfungselemente (84) eine elastisch nachgiebige, kreissegmentförmige Zunge (104) aufweist, die durch wenigstens einen schlitzartigen Einschnürungsbereich (105) im Führungsblock (89, 90) oder Grundkörper (77) oder Aufnahmeelement (91, 92) gebildet ist.

34. Führungselement nach Anspruch 33, **dadurch gekennzeichnet, daß** der Einschnürungsbereich (105) durch quer zur Längserstreckung des Führungselementes (64) aufeinander zulaufende U-förmige Trennfugen (106) gebildet ist und zwischen den Treanfugen (106) zumindest ein Verbindungssteg (103) ausgebildet ist, über welchen die Zunge (104) mit dem Führungsblock (89, 90) und/oder Grundkörper (77) einstückig verbunden ist.

35. Führungselement nach Anspruch 33 oder 34, **dadurch gekennzeichnet, daß** die Zunge (104) an ihrer der Längsseitenfläche (73) zugewandten Unterseite über einen in Längsrichtung des Grundkörpers (77) verlaufenden Verbindungssteg mit dem Grundkörper (77) einstückig verbunden ist.

36. Führungselement nach einem der Ansprüche 1 bis 33, **dadurch gekennzeichnet, daß** ein in Kraft- bzw. Energieeinwirkrichtung (120) verlaufender, maximal zulässiger, elastischer Verformungsweg des jeweiligen Anschlag- und/oder Dämpfungselementes (84) durch zumindest einen Endanschlag (116) begrenzt ist.

37. Führungselement nach einem der Ansprüche 1 bis 36, **dadurch gekennzeichnet, daß** die Anschlag- bzw. Dämpfungselemente (84) jeweils durch einen Faltensteg oder Quetschsteg gebildet sind.

38. Führungselement nach einem der Ansprüche 1 bis 36, **dadurch gekennzeichnet, daß** die Anschlag- bzw. Dämpfungselemente (84) jeweils durch einen Biegestab aus Kunststoff oder Metall gebildet sind und eine Breite (99, 94) des Führungsblockes (89, 90) oder des Grundkörpers (77) kleiner bemessen ist als eine Länge des Biegestabes.

39. Führungselement nach einem der Ansprüche 1 bis 36, **dadurch gekennzeichnet, daß** die Anschlag- bzw. Dämpfungselemente (84) jeweils durch in Längserstreckung des Grundkörpers (77) mehrere, über wenigstens einen Quersteg miteinander verbundene Längsstege gebildet sind, die um eine zu ihrer Längserstreckung senkrechten Achse auslenkbar ausgebildet sind.

40. Führungselement nach einem der Ansprüche 1 bis 39, **dadurch gekennzeichnet, daß** die Anschlag- bzw. Dämpfungselemente (84), im wesentlichen an die Ausnehmung (22, 55) begrenzende Endlagen angepaßte Anschlagflächen (113) aufweisen.

41. Führungselement nach einem der Ansprüche 1 bis 40, **dadurch gekennzeichnet, daß** die Anschlag- bzw. Dämpfungselemente (84) zur Absorption von Stoßenergie geeignet und aus elastischen Kunststoff, insbesondere thermoplastischem Kunststoff, z.B. Polyurethan (PUR), Polypropylen (PP), Polyvinylchlorid (PVC), Polyamid (PA), oder z.B. Gummi, Naturkautschuke, Silikone, etc. gebildet sind.

42. Führungselement nach einem der Ansprüche 1 bis 41, **dadurch gekennzeichnet, daß** die Anschlag- bzw. Dämpfungselemente (84) am Grundkörper (77) und/oder an den Führungsvorrichtungen (87, 88) und/oder an den Aufnahmeelementen (91, 92) aufextrudiert sind.

43. Führungselement nach Anspruch 1, 11 oder 18, **dadurch gekennzeichnet, daß** der Grundkörper (77) und/oder der Fühnmgsblock (89, 90) und/oder das Aufnahmeelement (91, 92) durch einen im wesentlichen biegefesten Kunststoff wie beispielsweise Polymethylmethacrylat (PMMA), Polyvenylchlorid (PVC), etc. gebildet ist.

44. Führungselement nach Anspruch 1, 11 oder 18, **dadurch gekennzeichnet, daß** der Grundkörper (77) und/oder der Führungsblock (89, 90) und/oder das Aufiiahmeelement (91, 92) durch einen faserverstärkten Kunststoff gebildet ist.

45. Fühnmgselement nach Anspruch 1, **dadurch gekennzeichnet, daß** dieses einstückig durch einen Mehrkomponentenspritzgußteil hergestellt ist.

46. Führungselement nach Anspruch 1, 11 oder 18, **dadurch gekennzeichnet, daß** der Grundkörper (77) und/oder der Führungsblock (89, 90) und/oder das Aufnahmeelement (91, 92) und/oder die Anschlag- bzw. Dämpfungselemente (84) durch einen metallischen Werkstoff gebildet ist oder sind.

47. Führungselement nach Anspruch 1, **dadurch gekennzeichnet, daß** der Grundkörper (77) zumindest eine Arretiervorrichtung (112) zur lösbaren Befestigung des Führungselementes (64) am Teil (42, 71) aufweist.

48. Führungselement nach Anspruch 47, **dadurch gekennzeichnet, daß** die Arretiervorrichtung (112) mehrere, die Längsseitenfläche (73) überragende Rastelemente aufweist, die auf einer den Haltearmen (95) gegenüberliegenden Seite angeordnet sind und mit dem Grundkörper (77) einstückig verbunden sind.

49. Führungselement nach Anspruch 47 oder 48, **dadurch gekennzeichnet, daß** die an den gegenüberliegenden Längseitenbereichen und senkrecht auf die Längsseitenfläche (73) ausgerichteten Rastelernerne hackenförmig ausgebildet sind und daß diese die Ausnehmung (22,55) durehragen und den Teil (71, 42) hintergreifen

50. Führungselement nach einem der Ansprüche 47 bis 49, **dadurch gekennzeichnet, daß** zumindest eines der Rastelemente in einer zu seiner Längserstreckung senkrechten Achse elastisch verfonnbar und rückstellbar ausgebildet ist

51. Führungselement nach einem der Ansprüche 1 bis 49, **dadurch gekennzeichnet, daß** ein zwischen zwei voneinander abgewandten Seitenflächen der Rastelemente bemessenes Breitenmaß geringfügig kleiner ausgebildet ist als eine Breite (21, 56) der Ausnehmung (22, 55) des Teiles (71, 42).

52. Verwendung des Führungselementes (64) nach einem der Ansprüche 1 bis 51 als Träger- und/oder Halteelement für Teile einer Fixiereinrichtung (4) einer Lenkwellenverstelleinheit (1).

53. Verstelleinrichtung (3) für eine Lenkwelle (2), mit einem die Lenkwelle (2) drehbeweglich lagernden, profilartigen Mantelrohr (10) und einer ortsfest angeordneten Halterung (5), wobei die Lenkwelle (2) in Richtung ihrer Längsachse (11) verschiebbar und/oder in einer dazu radialen Richtung verschwenkbar angeordnet ist, sowie über zumindest eine Fixiereinrichtung (4) das Mantelrohr (10) und die Halterung (5) in ihrer eingestellten Relativlage zueinander fixierbar gehalten sind, **dadurch gekennzeichnet, daß** die Fixiereinrichtung (4) zumindest ein Führungselement (64) und zumindest ein betätigbares Verstellelement (135) aufweist und das Führungselement (64) nach einem der Ansprüche 1 bis 51 ausgebildet ist

54. Verstelleinrichtung nach Anspruch 53, **dadurch gekennzeichnet, daß** das Führungselement (64) und das Mantelrohr (10) und/oder das Führungselement (64) und die Halterung (5) relativ zueinander verstellbar angeordnet sind.

55. Verstelleinrichtung nach Anspruch 53 oder 54, **dadurch gekennzeichnet, daß** im Mantelrohr (10) und/oder in der Halterung (5) eine Ausnehmung (55, 22) angeordnet ist und das Führungselement (64) entlang von ebenen Führungsflächen (63,117) in zur Längsseitenfläche (73) paralleler und senkrechter Richtung verstellbar geführt ist

56. Verstelleinrichtung nach einem der Ansprüche 53 bis 55, **dadurch** gekenazeichnet, daß die Fixiereinrichtung (4) zumindest ein quer zur Längsachse (11) der Lenkwelle (2) verlaufendes, die Ausnehmung (22, 55) durchragendes Spannelement (24), das Verstellelement (135) und ein elastisch verformbares Rückstellelement (134) umfaßt und daß zumindest ein Führungselement (64) am Spannelement (24) angeordnet sowie gegenüber diesem festgelegt ist, wobei das Führungselement (64) mit seiner Längsseitenfläche (73) zur bereichsweisen Anlage an einer die Ausnehmung (22, 55) umgrenzenden Fülmmgsfläche (63) des Mantelrohres (10) und/oder der Halterung (5) bestimmt ist und das Verstellelement (135) entgegen der Wirkung des Rückstellelementes (134) in zur Führungsfläche (63) etwa senkrechter Richtung relativ verstellbar und zum Herstellen einer Klemmverbindung zwischen dem Mantelrohr (10) und der Halterung (5) ausgebildet ist.

57. Verstelleinrichtung nach einem der Ansprüche 53 bis 56, **dadurch gekennzeichnet, daß** ein das Rückstellelement (134) und Verstellelement (135) positioniert aufnehmendes Aufnahmeelement (91) von einem in zur Längsmittelachse (26) des Spannelementes (24) paralleler Achse verstellbaren Verstellelement (135) zumindest bereichsweise umgeben ist.

58. Verstelleinrichtung nach Anspruch 57, **dadurch gekennzeichnet, daß** das Verstellelement (135) U-förmig ausgebildet ist

59. Verstelleinrichtung nach Anspruch 58, **dadurch gekennzeichnet, daß** das Verstellelement (135) an einer Basis (142) eine von dem Spannelement (24) durchsetzte, mehreckige Aussparung (137) zur verdrehgesicherten und positionierten Aufnahme des Spannelementes (24) aufweist und dem Mantelrohr (10) oder der Halterung (5) zugewandte Stirnkanten von aufragenden Schenkeln (143) mit Verzahnungselementen (144) versehen sind.

60. Verstelleinrichtung nach einem der Ansprüche 58 oder 59, **dadurch gekennzeichnet, daß** das Verstellelement (135) durch einen Zuschnitt-und/oder Stanz- und/ oder Biegeteil oder durch einen Sinterteil gebildet ist.

61. Verstelleinrichtung nach einem der Ansprüche 58 bis 60, **dadurch gekennzeichnet, daß** eine minimale lichte Weite zwischen den gegenüberliegenden Schenkeln (143) des Verstellelementes (135) zumindest geringfügig größer bemessen ist als eine maximale Breite (93) des Aufnahmeelementes (91).

62. Verstelleinrichtung nach einem der Ansprüche 53 bis 61, **dadurch gekennzeichnet, daß** das Verstellelement (135) zwischen den gegenüberliegenden Haltearmen (95) angeordnet ist und eine Verstellelementlänge (145) zumindest geringfügig kleiner bemessen ist als eine zwischen den Haltearmen (95) bemessene minimale lichte Weite (139).

63. Verstelleinrichtung nach einem der Ansprüche 53 bis 56, **dadurch gekennzeichnet, daß** das Führungselement (64) zwischen zwei voneinander distanzierten Anschlagflächen (72; 152) einer Ausnehmung (22, 55) verstellbar angeordnet ist und im Bereich zumindest einer Endlage der Ausnehmung (22, 55) zumindest eine dieser nachgeordnete, plastisch defomrierbare Deforniationsanordnung mit zumindest einem Verformungsteil (158) zur Absorption von, im Falle eines Fahizeugaufpralles einwirkenden Aufprallenergien vorgesehen ist.

64. Verstelleinrichtung nach Anspruch 53, **dadurch gekennzeichnet, daß** der erste, ein Mantelrohr (10) bildende Teil (42) mehrere, unlösbar miteinander verbundene Mantelrohrteile (45) aufweist, wovon der erste den weiteren Mantelrohrteil (45) zumindest bereichsweise umgebende Mantelrohrteil (45) mehreckig und der weitere Mantelrohrteil (45) kreisrund ausgebildet ist.

65. Verstelleinrichtung nach Anspruch 63 und 64, **dadurch gekennzeichnet, daß** der erste Mantelrohrteil (45) mit der durch Anschlagflächen (72) begrenzten Ausnehmung (55) und der weitere Mantelrohrteil (45) mit im Bereich dieser Ausnehmung (55) angeordneten, in Richtung seiner Längserstreckung voneinander distanzierten und eine Außenfläche überragende Laschen (151) ausgestattet ist

66. Verstelleinnchtung nach Anspruch 53 oder 65, **dadurch gekennzeichnet, daß** das Führungselement (64) zwischen den beiden Mantelrohrteilen (45) und zwischen den Laschen (151) angeordnet ist.

67. Verstelleinrichtung nach einem der Ansprüche 53 bis 66, **dadurch gekennzeichnet, daß** ein maximaler Verstellweg (76) des in zwei Raumrichtungen geführten Führungselementes (64) durch die Anschlagflächen (72) der Ausnehmung (22, 55) und/oder Anschlagflächen (152) der Laschen (151) begrenzt ist.

68. Verstelleinrichtung nach Anspruch 63, **dadurch gekennzeichnet, daß** unmittelbar an der Endlage der Ausnehmung (22, 55) eine in ihrer Breite (159) größer als die Breite (21, 56) der Ausnehmung (22, 55) bemessene Freistellung (160) angeordnet ist, die von dem sich quer zur Ausnehmung (22, 55) erstreckenden, streifenartigen Verformungsteil (158) in zwei voneinander getrennte Bereiche aufgeteilt ist.

69. Verstelleinrichtung nach Anspruch 68, **dadurch gekennzeichnet, daß** eine Länge des Verformungsteiles (158) zumindest gleich oder größer als die Breite (159) der Freistellung (160) ausgebildet ist und/oder daß eine Stärke (161) des Verformungsteiles (158) in Richtung seiner Längserstreckung unterschiedlich bemessen ist.

## Claims

1. Guiding element (64) of a fixing device (4) for a steering shaft (2), with an elongate base body (77), a side face of which is provided in the form of a lateral guide surface (101) or longitudinal side face (73), certain regions of which sit on at least one guide surface (117, 63), and having a cut-out (74) to allow a passage for a clamping element (24) perpendicular to the longitudinal side face (73), and the base body (77) has at least one elastically deformable, rebounding stop or damping element (84) respectively on its end regions (85, 86) facing away from one another, **characterised in that** the base body (77) has at least one receiving element (91) comprising at least two retaining arms (95) disposed at a distance apart from one another oriented more or less perpendicular to the longitudinal side face (73) of the base body (77) and projecting out beyond the latter.

2. Guiding element as claimed in claim 1, **characterised in that** the at least one receiving element (91) and the base body (77) are of an integral design.

3. Guiding element as claimed in claim 1, **characterised in that** the at least one receiving element (91) is a separate component which is joined to the base body (77).

4. Guiding element as claimed in one of claims 1 to 3, **characterised in that** the at least one receiving element (91) extends across only a part of the guiding element length (75) and is preferably of a C-shaped design in cross-section.

5. Guiding element as claimed in one of claims 1 to 4, **characterised in that** parts of the fixing device (4), in particular the clamping element (24) and a return element (134) are held in position between the retaining arms (95) by the receiving element (91).

6. Guiding element as claimed in one of claims 1 to 5, **characterised in that** the retaining arms (95) extend in a first direction starting from the longitudinal side face (73) and are connected to the latter by a base (96) extending between them.

7. Guiding element as claimed in one of claims 1 to 6, **characterised in that** the retaining arms (95) are disposed at a distance apart from one another and extend transversely to the longitudinal extension of the base body (77).

8. Guiding element as claimed in one of claims 1 to 6, **characterised in that** the retaining arms (95) are disposed at a distance apart from one another and extend in the longitudinal extension of the base body (77).

9. Guiding element as claimed in claim 1, **characterised in that** at least one guide device (87) is connected to the base body (77) at least as a means of laterally guiding the guiding element (64) along a guide surface (117).

10. Guiding element as claimed in claim 9, **characterised in that** the guide device (87) is formed by the base body (77).

11. Guiding element as claimed in claim 9, **characterised in that** the guide device (87) is formed by prismatic guide blocks (89, 90) disposed on a side lying opposite the retaining arms (95) and the guide device (87) extends in the direction of the longitudinal extension of the base body (77).

12. Guiding element as claimed in claim 11, **characterised in that** the guide device (87) projects out from the longitudinal side face (73) and has a height perpendicular to the longitudinal side face (73) which is dimensioned so that the guide device (87) projects at least in certain regions into a slot-shaped cut-out (55, 22) to be provided in the part (42, 71) if the guide element (64) is disposed on the part (42, 71).

13. Guiding element as claimed in one of claims 1 to 12, **characterised in that** the guide device (87) is disposed on the receiving element (91) and is integrally joined to the base (96).

14. Guiding element as claimed in claim 13, **characterised in that** the guide device (87) and the receiving element (91) are separated from one another by at least the wall thickness (98) of the base (96) and are disposed directly above one another.

15. Guiding element as claimed in one of claims 6 to 14, **characterised in that** the base body (77) is formed by the base (96).

16. Guiding element as claimed in claim 11, **characterised in that** the guide blocks (89, 90) have a width (99) as measured between two lateral guide faces (101) extending parallel with one another in the longitudinal direction and perpendicular to the longitudinal side face (73) which preferably corresponds to a width (94) of the base body (77).

17. Guiding element as claimed in claim 11, **characterised in that** a part-region of the longitudinal side face (73) of the base (96), in particular longitudinal peripheral regions (100) bounding the guide blocks (89, 90) on each side, form a sliding or abutment surface (83) and the longitudinal peripheral regions (100) extend with widths projecting laterally beyond the base body (77) in its width (94).

18. Guiding element as claimed in claim 1, **characterised in that** in addition to the first receiving element (91), another receiving element (92) is provided on the base body (77) and the other receiving element (92) is connected to the first receiving element (91) via the base body (77).

19. Guiding element as claimed in claim 18, **characterised in that** at least one clearance-limiting element (102) is disposed in the other receiving element (92) between the retaining arms (95).

20. Guiding element as claimed in one of claims 1 to 19, **characterised in that** the receiving element (91, 92) is respectively provided with a cut-out (74) which extends through the base (96) and the guide blocks (89, 90) for the clamping element (24) and the clearance-limiting element (102).

21. Guiding element as claimed in one of claims 1 to 20, **characterised in that** another guide device (88) disposed at a distance apart from the first guide device (87) is connected to the base body (77), which is provided with a guide part (111) for the clearance-limiting element (102) oriented in the direction perpendicular to the longitudinal side face (73) and extending through the cut-out (22, 55) of the part (71, 42).

22. Guiding element as claimed in claim 21, **characterised in that** the guide part (111) is formed by at least two sleeve parts with a half-shell shape separated from one another.

23. Guiding element as claimed in one of claims 1 to 20, **characterised in that** the retaining arms (95) have angled projections (108) directed towards one another at their free end regions, which expediently extend across the entire width (93) of the receiving element (91, 92) forming retaining surfaces (107) for supporting the clamping element (24) or the clearance-limiting element (102).

24. Guiding element as claimed in claim 1 or 23, **characterised in that** at least one of the retaining arms (95) is of an elastically deformable and rebounding design in an axis perpendicular to its longitudinal extension.

25. Guiding element as claimed in claim 24, **characterised in that** a wall thickness of the retaining arms (95) tapers in a conical arrangement starting from the base (96), the greater the distance in the direction of the projections (108).

26. Guiding element as claimed in one of claims 6 to 25, **characterised in that** at least one strip-type locking element (129) acting in a resiliently elastic manner is disposed on the internal face of the base (96) between the retaining arms (95).

27. Guiding element as claimed in claim 26, **characterised in that** the locking element (129) has a curved, convex contour, in particular directed towards the base (96).

28. Guiding element as claimed in claim 1, 9, 18 or 21, **characterised in that** the stop or damping elements (84) are formed by a part-region of the base body (77) and/or the guide device (87, 88) and/or the receiving elements (91, 92).

29. Guiding element as claimed in claim 28, **characterised in that** the stop or damping elements (84) have properties which are identical to or different from the remaining region of the base body (77) in terms of elasticity, stiffness, etc..

30. Guiding element as claimed in claim 1, 9, 18 or 21, **characterised in that** the stop or damping elements (84) are integrally formed on or inserted in a part-region of the base body (77) and/or the guide block (89, 90) and/or the receiving element (91, 92).

31. Guiding element as claimed in one of claims 1, 28 to 30, **characterised in that** the stop or damping elements (84) have a progressive load characteristic.

32. Guiding element as claimed in claim 30, **characterised in that** the stop or damping elements (84) are integrally formed on the base body (77) and/or guide block (89, 90) and/or receiving element (91, 92) and at least one of the stop or damping elements (84) is of a meandering shape and has at least one wall part (154) projecting out from a side end face (80, 81) of the base body (77), which is of an elastically displaceable design.

33. Guiding element as claimed in one of claims 1 to 32, **characterised in that** at least one of the stop or damping elements (84) has an elastically flexible, segment-shaped tongue (104) formed by at least one slot-type neck region (105) in the guide block (89,90) or base body (77) or receiving element (91, 92).

34. Guiding element as claimed in claim 33, **characterised in that** the neck region (105) is formed by mutually converging U-shaped cuts (106) disposed transversely to the longitudinal extension of the guide element (64) and at least one connecting web (103) is formed between the cuts (106) by means of which the tongue (104) is integrally joined to the guide block (89,90) and/or base body (77).

35. Guiding element as claimed in claim 33 or 34, **characterised in that** the tongue (104) is integrally joined to the base body (77) at its bottom face directed towards the longitudinal side face (73) by means of a connecting web extending in the longitudinal direction of the base body (77).

36. Guiding element as claimed in one of claims 1 to 33, **characterised in that** a maximum permissible deformation path of the respective stop or damping element (84) in the force or energy acting direction (120) is restricted by at least one end stop (116).

37. Guiding element as claimed in one of claims 1 to 36, **characterised in that** the stop or damping elements (84) are respectively formed by a folded web or web pleat.

38. Guiding element as claimed in one of claims 1 to 36, **characterised in that** the stop or damping elements (84) are respectively formed by a flexion bar of plastic or metal and a width (99, 94) of the guide block (89, 90) or the base body (77) is of a smaller dimension than a length of the flexion bar.

39. Guiding element as claimed in one of claims 1 to 36, **characterised in that** the stop or damping elements (84) are respectively formed by several longitudinal webs connected by means of at least one transverse web in the longitudinal extension of the base body (77), which can be deflected about an axis perpendicular to their longitudinal extension.

40. Guiding element as claimed in one of claims 1 to 39, **characterised in that** the stop or damping elements (84) have stop surfaces (113) essentially adapted to the end positions bounding the cut-out (22, 55).

41. Guiding element as claimed in one of claims 1 to 40, **characterised in that** the stop or damping elements (84) are suitable for absorbing impact energy and are made from an elastic synthetic material, in particular thermosetting plastic, e.g. polyurethane (PUR), polypropylene (PP), polyvinyl chloride (PVC), polyamide (PA), or for example rubber, natural rubber, silicone, etc..

42. Guiding element as claimed in one of claims 1 to 41, **characterised in that** the stop or damping elements (84) are extruded onto the base body (77) and/or onto the guide devices (87, 88) and/or onto the receiving elements (91, 92).

43. Guiding element as claimed in claim 1, 11 or 18, **characterised in that** the base body (77) and/or the guide block (89, 90) and/or the receiving element (91, 92) is made from an essentially bending-resistant plastic material, such as polymethyl methacrylate (PMMA), polyvinyl chloride (PVC), etc..

44. Guiding element as claimed in claim 1, 11 or 18, **characterised in that** the base body (77) and/or the guide block (89, 90) and/or the receiving element (91, 92) is made from a fibre-reinforced plastic.

45. Guiding element as claimed in claim 1, **characterised in that** it is produced integrally as a multi-component injection-cast part.

46. Guiding element as claimed in claim 1, 11 or 18, **characterised in that** the base body (77) and/or the guide block (89, 90) and/or the receiving element (91, 92) and/or the stop or damping elements (84) is or are made from a metal material.

47. Guiding element as claimed in claim 1, **characterised in that** the base body (77) has at least one locking mechanism (112) for releasably securing the guide element (64) on the part (42, 71).

48. Guiding element as claimed in claim 47, **characterised in that** the locking mechanism (112) has several catch elements projecting out from the longitudinal side face (73), which are disposed on the side lying opposite the retaining arms (95) and are integrally joined to the base body (77).

49. Guiding element as claimed in claim 47 or 48, **characterised in that** the catch elements on the oppositely lying longitudinal side regions oriented perpendicular to the longitudinal side face (73) are of a hook-shaped design and extend through the cut-out (22, 55) and locate behind the part (71, 42).

50. Guiding element as claimed in one of claims 47 to 49, **characterised in that** at least one of the catch elements is designed to be elastically deformable and capable of rebounding in an axis perpendicular to its longitudinal extension.

51. Guiding element as claimed in one of claims 1 to 49, **characterised in that** a width dimension measured between two mutually remote side faces of the catch elements is shorter than a width (21, 56) of the cut-out (22, 55) of the part (71, 42).

52. Use of the guide element (64) as claimed in one of claims 1 to 51 as a support and/or retaining element for parts of a fixing device (4) of a steering shaft adjusting unit (1).

53. Adjusting mechanism (3) for a steering shaft (2), with a section-type steering column tube (10) mounting the steering shaft (2) so that it can be displaced in rotation and a stationary holder (5), which steering shaft (2) is mounted so as to be displaceable in the direction of its longitudinal axis (11) and/or pivotable in a radial direction with respect to the latter, and the steering column tube (10) and the holder (5) can be held fixed in their set position relative to one another by means of at least one fixing mechanism (4), **characterised in that** the fixing mechanism (4) has at least one guide element (64) and at least one actuatable adjusting element (135), and the guide element (64) is of the type as claimed in one of claims 1 to 51.

54. Adjusting mechanism as claimed in claim 53, **characterised in that** the guide element (64) and the steering column tube (10) and/or the guide element (64) and the holder (5) are disposed so as to be displaceable relative to one another.

55. Adjusting mechanism as claimed in claim 53 or 54, **characterised in that** a cut-out (55, 22) is provided in the steering column tube (10) and/or in the holder (5) and the guide element (64) is displaceably guided along flat guide surfaces (63, 117) in the direction parallel with and perpendicular to the longitudinal side face (73).

56. Adjusting mechanism as claimed in one of claims 53 to 55, **characterised in that** the fixing mechanism (4) comprises at least one clamping element (24) extending through the cut-out (22, 55) transversely to the longitudinal axis (11) of the steering shaft (2), the adjusting element (135) and an elastically deformable return element (134), and at least one guide element (64) is provided on the clamping element (24) and is fixed relative thereto, the purpose of the guide element (64) being to provide, by means of its longitudinal side face (73), an abutment in certain regions against a guide surface (35) of the steering wheel tube (10) and/or the holder (5) bounding the cut-out (22, 55), and the adjusting element (135) is relatively displaceable against the action of the return element (134) in the direction more or less perpendicular to the guide surface (63) and is designed to establish a clamp connection between the steering wheel tube (10) and the holder (5).

57. Adjusting mechanism as claimed in one of claims 53 to 56, **characterised in that** a receiving element (91) holding the return element (134) and adjusting element (135) in position is surrounded in at least certain regions by an adjusting element (135) displaceable in an axis disposed parallel with the longitudinal mid-axis (26) of the clamping element (24).

58. Adjusting mechanism as claimed in claim 57, **characterised in that** the adjusting element (135) is of a U-shaped design.

59. Adjusting mechanism as claimed in claim 58, **characterised in that** the adjusting element (135) has a polygonal cut-out (137) in its base (142) through which the clamping element (24) extends for holding the clamping element (24) in position so that it is prevented from turning, and terminal edges of protruding legs (143) facing the steering column tube (10) or the holder (5) are provided with toothing elements (144).

60. Adjusting mechanism as claimed in one of claims 58 or 59, **characterised in that** the adjusting element (135) is provided in the form of a cut and/or punched and or bent part or in the form of a sintered part.

61. Adjusting mechanism as claimed in one of claims 58 to 60, **characterised in that** a minimum internal width between the oppositely lying legs (143) of the adjusting element (135) is at least slightly larger in dimension than a maximum width (93) of the receiving element (91).

62. Adjusting mechanism as claimed in one of claims 53 to 61, **characterised in that** the adjusting element (135) is disposed between the oppositely lying retaining arms (95) and an adjusting element length (145) is at least slightly smaller in dimension than a minimum internal width (139) as measured between the retaining arms (95).

63. Adjusting mechanism as claimed in one of claims 53 to 56, **characterised in that** the guide element (64) is disposed so as to be displaceable between two mutually spaced stop surfaces (72; 152) of a cut-out (22, 55) and, disposed downstream of the region of at least one end position of the cut-out (22, 55) is a plastically deformable deformation arrangement with at least one deformation part (158) for absorbing impact energies generated in the event of a vehicle impact.

64. Adjusting mechanism as claimed in claim 53, **characterised in that** the first part (42) forming a steering column tube (10) has several steering column tube parts (45) non-releasably connected to one another, of which the first steering column tube part (45) surrounding at least certain regions of the other steering column tube part (45) is polygonal and the other steering column tube part (45) is circular.

65. Adjusting mechanism as claimed in claim 63 and 64, **characterised in that** the first steering column tube part (45) incorporating the cut-out (55) bounded by stop surfaces (72) and the other steering column tube part (45) are provided with tabs (151) projecting out from an external face disposed in the region of this cut-out (55) and spaced at a distance apart from one another in the direction of its longitudinal extension.

66. Adjusting mechanism as claimed in claim 53 or 65, **characterised in that** the guide element (64) is disposed between the two steering column tube parts (45) and between the tabs (151).

67. Adjusting mechanism as claimed in one of claims 53 to 66, **characterised in that** a maximum displacement path (76) of the guide element (64) guided in two spatial directions is restricted by the stop surfaces (72) of the cut-out (22, 55) and/or stop surfaces (152) of the tabs (151).

68. Adjusting mechanism as claimed in claim 63, **characterised in that** a free region (160) with a width (159) bigger than the width (21, 56) of the cut-out (22, 55) is disposed directly adjoining the end position of the cut-out (22, 55), which is split into two separate regions by the strip-type deformation part (158) extending transversely to the cut-out (22, 55).

69. Adjusting mechanism as claimed in claim 68, **characterised in that** a length of the deformation part (158) is at least identical to or bigger than the width (159) of the free region (160) and/or a thickness (161) of the deformation part (158) differs in dimension in the direction of its longitudinal extension.

## Revendications

1. Elément de guidage (64) destiné à un dispositif de fixation (4) d'un arbre de direction (2), avec un corps de base allongé (77) à partir duquel une face latérale est formée comme face de guidage latérale (101) ou comme face latérale longitudinale (73) pour un appui par segments sur au moins une face de guidage (117, 63) et qui est muni d'un évidement (74) pour le passage vertical d'un élément tendeur (24) par rapport à la face latérale longitudinale (73), dans lequel le corps de base (77) comporte, de préférence dans ses zones d'extrémités (85, 86) opposées l'une à l'autre, au moins un élément de butée ou d'amortissement (84) déformable élastiquement pouvant être reculé, **caractérisé en ce que** le corps de base (77) comporte un élément de logement (91) qui comprend au moins deux bras de support (95) disposés à distance l'un de l'autre, orientés à peu près verticalement par rapport à la face latérale longitudinale (73) du corps de base (77) et faisant saillie au-dessus de celle-ci.

2. Elément de guidage selon la revendication 1, **caractérisé en ce qu'**au moins un élément de logement (91) et le corps de base (77) sont configurés en une seule partie.

3. Elément de guidage selon la revendication 1, **caractérisé en ce qu'**au moins un élément de logement (91) forme un élément de construction propre qui est relié au corps de base (77).

4. Elément de guidage selon l'une quelconque des revendications 1 à 3, **caractérisé en ce qu'**au moins un élément de logement (91) s'étend seulement sur une partie de la longueur de l'élément de guidage (75) et présente une section transversale, de préférence, en forme de C.

5. Elément de guidage selon l'une quelconque des revendications 1 à 4, **caractérisé en ce que** des parties du dispositif de fixation (4), en particulier l'élément tendeur (24) et un élément de rappel (134), sont maintenues en position par l'élément de logement (91) entre les bras de support (95).

6. Elément de guidage selon l'une quelconque des revendications 1 à 5, **caractérisé en ce que** les bras de support (95) s'étendent dans une première direction à partir de la face latérale longitudinale (73), entre lesquels est disposée une base (96) reliant ceux-ci.

7. Elément de guidage selon l'une quelconque des revendications 1 à 6, **caractérisé en ce que** les bras de support (95) sont disposés à distance l'un de l'autre et s'étendent verticalement par rapport à l'étendue longitudinale du corps de base (77).

8. Elément de guidage selon l'une quelconque des revendications 1 à 6, **caractérisé en ce que** les bras de support (95) sont disposés à distance l'un de l'autre et s'étendent dans la direction de l'étendue longitudinale du corps de base (77).

9. Elément de guidage selon la revendication 1, **caractérisé en ce qu'**au moins un dispositif de guidage (87) est relié au corps de base (77) au moins pour le guidage latéral de l'élément de guidage (64) le long d'une face de guidage (117).

10. Elément de guidage selon la revendication 9, **caractérisé en ce que** le dispositif de guidage (87) est formé par le corps de base (77).

11. Elément de guidage selon la revendication 9, **caractérisé en ce que** le dispositif de guidage (87) est formé par des blocs de guidage (89, 90) prismatiques, disposés sur un côté opposé aux bras de support (95) et **en ce que** le dispositif de guidage (87) s'étend dans la direction de l'étendue longitudinale du corps de base (77).

12. Elément de guidage selon la revendication 11, **caractérisé en ce que** le dispositif de guidage (87) fait saillie au-dessus de la face latérale longitudinale (73) et présente une hauteur perpendiculaire à la face latérale longitudinale (73) qui est calculée de telle manière que le dispositif de guidage (87) déborde au moins par segments dans un creux (55, 22) en forme de fente qui doit être disposé dans la portion (42, 71) lorsque l'élément de guidage (64) est placé sur la portion (42, 71).

13. Elément de guidage selon l'une quelconque des revendications 1 à 12, **caractérisé en ce que** le dispositif de guidage (87) est disposé dans l'élément de logement (91) et relié en une seule partie avec la base (96).

14. Elément de guidage selon la revendication 13, **caractérisé en ce que** le dispositif de guidage (87) et l'élément de logement (91) sont séparés l'un de l'autre par au moins une épaisseur de paroi (98) de la base (96) et sont disposés directement l'un au-dessus de l'autre.

15. Elément de guidage selon l'une quelconque des revendications 6 à 14, **caractérisé en ce que** le corps de base (77) est formé par la base (96).

16. Elément de guidage selon la revendication 11, **caractérisé en ce que** les blocs de guidage (89, 90) présentent une largeur (99) calculée entre deux faces de guidage latérales (101) s'étendant parallèlement l'une à l'autre dans la direction longitudinale et perpendiculairement à la face latérale longitudinale (73) qui correspond, de préférence, à une largeur (94) du corps de base (77).

17. Elément de guidage selon la revendication 11, **caractérisé en ce qu'**une zone partielle de la face latérale longitudinale (73) de la base (96), en particulier des zones marginales longitudinales (100) limitant les blocs de guidage (89, 90) des deux côtés, forment une face de glissement ou d'appui (83) et le corps de base (77) est latéralement dépassé en hauteur sur sa largeur (94) par les largeurs des zones marginales longitudinales (100).

18. Elément de guidage selon la revendication 1, **caractérisé en ce qu'**en plus du premier élément de logement (91) dans le corps de base (77), il est prévu un autre élément de logement (92), l'autre élément de logement (92) étant relié au premier élément de logement (91) par le corps de base (77).

19. Elément de guidage selon la revendication 18, **caractérisé en ce qu'**un élément de limitation de jeu (102) est disposé dans l'autre élément de logement (92) entre les bras de support (95).

20. Elément de guidage selon l'une quelconque des revendications 1 à 20, **caractérisé en ce que** l'élément de logement (91, 92) est muni d'un évidement (74) traversant la base (96) et les blocs de guidage (89, 90) pour l'élément tendeur (24) et l'élément de limitation de jeu (102).

21. Elément de guidage selon l'une quelconque des revendications 1 à 20, **caractérisé en ce qu'**un autre dispositif de guidage (88) disposé à distance du premier dispositif de guidage (87), qui est muni d'une portion de guidage (111) orientée dans la direction perpendiculaire à la face latérale longitudinale (73) et traversant le creux (22, 55) de la portion (71, 42) pour l'élément de limitation de jeu (102), est relié au corps de base (77).

22. Elément de guidage selon la revendication 21, **caractérisé en ce que** la portion de guidage (111) est formée par au moins deux portions de manchon en forme de demi-coques séparées l'une de l'autre.

23. Elément de guidage selon l'une quelconque des revendications 1 à 20, **caractérisé en ce que** les bras de support (95) sont munis, dans leurs zones d'extrémités libres, de parties en saillie (108) dirigées les unes vers les autres, déviées et s'étendant, de manière appropriée, sur toute la largeur (93) de l'élément de logement (91, 92), formant des faces de support (107), pour l'appui de l'élément tendeur (24) ou de l'élément de limitation de jeu (102).

24. Elément de guidage selon la revendication 1 ou 23, **caractérisé en ce qu'**au moins l'un des bras de support (95) est déformable élastiquement sur un axe perpendiculaire à son extension longitudinale et peut être reculé.

25. Elément de guidage selon la revendication 24, **caractérisé en ce qu'**une épaisseur de paroi des bras de support (95) s'amincit en forme de cône au fur et à mesure que la distance augmente à partir de la base (96) dans la direction des parties en saillie (108).

26. Elément de guidage selon l'une quelconque des revendications 6 à 25, **caractérisé en ce qu'**au moins un élément d'arrêt (129) à déformation élastique en forme de bande est disposé sur le côté intérieur de la base (96) entre les bras de support (95).

27. Elément de guidage selon la revendication 25, **caractérisé en ce que** l'élément d'arrêt (129) a un tracé convexe courbé, en particulier tourné vers la base (96).

28. Elément de guidage selon la revendication 1, 9, 18 ou 21, **caractérisé en ce que** les éléments de butée ou d'amortissement (84) sont formés par une zone partielle du corps de base (77) et/ou du dispositif de guidage (87, 88) et/ou des éléments de logement (91, 92).

29. Elément de guidage selon la revendication 28, **caractérisé en ce que** les éléments de butée ou d'amortissement (84) présentent des propriétés identiques ou différentes en terme d'élasticité, de résistance, etc. pour la zone restante du corps de base (77).

30. Elément de guidage selon la revendication 1, 9, 18 ou 21, **caractérisé en ce que** les éléments de butée ou d'amortissement (84) sont moulés ou insérés dans une zone partielle du corps de base (77) et/ou du bloc de guidage (89, 90) et/ou de l'élément de logement (91, 92).

31. Elément de guidage selon l'une quelconque des revendications 1, 28 à 30, **caractérisé en ce que** les éléments de butée ou d'amortissement (84) présentent un comportement de charge progressif.

32. Elément de guidage selon la revendication 30, **caractérisé en ce que** les éléments de butée ou d'amortissement (84) sont moulés en une seule partie dans le corps de base (77) et/ou le bloc de guidage (89, 90) et/ou l'élément de logement (91, 92) et au moins l'un des éléments de butée ou d'amortissement (84) a une forme de méandre et comporte au moins une portion de paroi (154) en saillie sur une face frontale (80, 81) du corps de base (77) qui est déplaçable élastiquement.

33. Elément de guidage selon l'une quelconque des revendications 1 à 32, **caractérisé en ce qu'**au moins l'un des éléments de butée ou d'amortissement (84) comporte une languette (104) déformable élastiquement en forme de segment de cercle qui est formée par au moins une zone de rétrécissement en forme de fente (105) dans le bloc de guidage (89, 90) ou dans le corps de base (77) ou dans l'élément de logement (91, 92).

34. Elément de guidage selon la revendication 33, **caractérisé en ce que** la zone de rétrécissement (105) est formée par des joints de séparation (106) en forme de U arrivant les uns sur les autres perpendiculairement à l'étendue longitudinale de l'élément de guidage (64) et **en ce qu'**au moins une nervure de liaison (103) est formée entre les joints de séparation (106), qui permet de relier la languette (104) en une seule partie au bloc de guidage (89, 90) et/ou au corps de base (77).

35. Elément de guidage selon la revendication 33 ou 34, **caractérisé en ce que**, sur sa face inférieure tournée vers la face latérale longitudinale (73), la languette (104) est reliée en une seule partie au corps de base (77) par une nervure de liaison s'étendant dans la direction longitudinale du corps de base (77).

36. Elément de guidage selon l'une quelconque des revendications 1 à 33, **caractérisé en ce qu'**un trajet de déformation élastique maximal acceptable, s'étendant dans la direction d'effet dynamique ou énergétique (120) de l'élément de butée ou d'amortissement correspondant (84), est limité par au moins une butée de fin de course (116).

37. Elément de guidage selon l'une quelconque des revendications 1 à 36, **caractérisé en ce que** les éléments de butée ou d'amortissement (84) sont formés chacun par une nervure pliée ou compressée.

38. Elément de guidage selon l'une quelconque des revendications 1 à 36, **caractérisé en ce que** les éléments de butée ou d'amortissement (84) sont formés chacun par une barre de flexion en matière plastique ou en métal et **en ce qu'**une largeur (99, 94) du bloc de guidage (89, 90) ou du corps de base (77) est plus petite qu'une longueur de la barre de flexion.

39. Elément de guidage selon l'une quelconque des revendications 1 à 36, **caractérisé en ce que** les éléments de butée ou d'amortissement (84) sont formés chacun par plusieurs nervures longitudinales reliées les unes aux autres par au moins une nervure transversale sur l'étendue longitudinale du corps de base (77), qui peuvent être orientées autour d'un axe vertical par rapport à leur étendue longitudinale.

40. Elément de guidage selon l'une quelconque des revendications 1 à 39, **caractérisé en ce que** les éléments de butée ou d'amortissement (84) comportent des faces de butée (113) sensiblement adaptées aux positions de fin de course limitant le creux (22, 55).

41. Elément de guidage selon l'une quelconque des revendications 1 à 40, **caractérisé en ce que** les éléments de butée ou d'amortissement (84) sont appropriés pour l'absorption d'énergie de choc et sont faits en une matière élastique, en particulier en une matière thermoplastique, par exemple du polyuréthane (PUR), du polypropylène (PP), du polychlorure de vinyle (PVC), du polyamide (PA) ou, par exemple, du caoutchouc, du caoutchouc naturel, de la silicone, etc.

42. Elément de guidage selon l'une quelconque des revendications 1 à 41, **caractérisé en ce que** les éléments de butée ou d'amortissement (84) sont extrudés dans le corps de base (77) et/ou dans les dispositifs de guidage (87, 88) et/ou dans les éléments de logement (91, 92).

43. Elément de guidage selon la revendication 1, 11 ou 18, **caractérisé en ce que** le corps de base (77) et/ou le bloc de guidage (89, 90) et/ou l'élément de logement (91, 92) est constitué d'une matière plastique sensiblement résistante à la flexion, comme par exemple du méthacrylate de polyméthyle (PMMA), du polychlorure de vinyle (PVC), etc.

44. Elément de guidage selon la revendication 1, 11 ou 18, **caractérisé en ce que** le corps de base (77) et/ou le bloc de guidage (89, 90) et/ou l'élément de logement (91, 92) est constitué d'une matière plastique renforcée par des fibres.

45. Elément de guidage selon la revendication 1, **caractérisé en ce que** celui-ci est fabriqué à l'aide d'une pièce à plusieurs composants moulée par injection.

46. Elément de guidage selon la revendication 1, 11 ou 18, **caractérisé en ce que** le corps de base (77) et/ou le bloc de guidage (89, 90) et/ou l'élément de logement (91, 92) et/ou les éléments de butée ou d'amortissement (84) est constitué ou sont constitués d'une matière métallique.

47. Elément de guidage selon la revendication 1, **caractérisé en ce que** le corps de base (77) comporte un dispositif d'arrêt (112) pour la fixation détachable de l'élément de guidage (64) à la portion (42, 71).

48. Elément de guidage selon la revendication 47, **caractérisé en ce que** le dispositif d'arrêt (112) comporte plusieurs éléments d'encliquetage faisant saillie au-dessus de la face latérale longitudinale (73) qui sont disposés sur un côté opposé aux bras de support (95) et qui sont reliés en une seule partie au corps de base (77).

49. Elément de guidage selon la revendication 47 ou 48, **caractérisé en ce que** les éléments d'encliquetage disposés dans les zones latérales longitudinales et orientés perpendiculairement à la face latérale longitudinale (73) sont configurés en forme de mâchoires et **en ce que** ceux-ci font saillie à travers le creux (22, 55) et viennent en prise à l'arrière de la portion (71, 42).

50. Elément de guidage selon l'une quelconque des revendications 47 à 49, **caractérisé en ce qu'**au moins l'un des éléments d'encliquetage est déformable élastiquement et peut être reculé dans un axe perpendiculaire à son étendue longitudinale.

51. Elément de guidage selon l'une quelconque des revendications 1 à 49, **caractérisé en ce qu'**une largeur mesurée entre deux faces latérales opposées l'une à l'autre des éléments d'encliquetage est légèrement inférieure à une largeur (21, 56) de le creux (22, 55) de la portion (71, 42).

52. Utilisation de l'élément de guidage (64) selon l'une quelconque des revendications 1 à 51 comme élément de soutien et/ou de support pour les pièces d'un dispositif de fixation (4) d'une unité de réglage d'un arbre de direction (1).

53. Dispositif de réglage (3) pour un arbre de direction (2), avec un tube de protection (10) profilé dans lequel l'arbre de direction (2) est logé en rotation et avec un dispositif de retenue (5) stationnaire, l'arbre de direction (2) étant disposé pour pouvoir se déplacer dans la direction de son axe longitudinal (11) et/ou pour pouvoir pivoter dans une direction radiale par rapport à celle-ci, et le tube de protection (10) et le dispositif de retenue (5) étant maintenus fixement l'un par rapport à l'autre dans leur position relative réglée par l'intermédiaire d'au moins un dispositif de fixation (4), **caractérisé en ce que** le dispositif de fixation (4) comporte au moins un élément de guidage (64) et au moins un élément de réglage actionnable (135) et **en ce que** l'élément de guidage (64) est configuré selon l'une quelconque des revendications 1 à 51.

54. Dispositif de réglage selon la revendication 53, **caractérisé en ce que** l'élément de guidage (64) et le tube de protection (10) et/ou l'élément de guidage (64) et le dispositif de retenue (5) sont disposés de manière réglage les uns par rapport aux autres.

55. Dispositif de réglage selon la revendication 53 ou 54, **caractérisé en ce qu'**un creux (55, 22) est disposé dans le tube de protection (10) et/ou dans le dispositif de retenue (5) et l'élément de guidage (64) est guidé de manière réglable le long des faces de guidage planes (63, 117) dans la direction parallèle et perpendiculaire à la face latérale longitudinale (73).

56. Dispositif de réglage selon l'une quelconque des revendications 53 à 55, **caractérisé en ce que** le dispositif de fixation (4) comporte au moins un élément tendeur (24) s'étendant perpendiculairement à l'axe longitudinal (11) de l'arbre de direction (2), faisant saillie à travers le creux (22, 55), l'élément de réglage (135) et un élément de rappel (134) déformable élastiquement, et **en ce qu'**au moins un élément de guidage (64) est placé sur l'élément tendeur (24) et fixé par rapport à celui-ci, l'élément de guidage (64) étant prévu pour un appui par segments avec sa face latérale longitudinale (73) sur une face de guidage (63) délimitant le creux (22, 55) du tube de protection (10) et/ou du dispositif de retenue (5) et l'élément de réglage (135) étant réglable relativement dans la direction à peu près perpendiculaire à la face de guidage (63) contre l'effet de l'élément de rappel (134) et étant configuré pour établir une jonction par serrage entre le tube de protection (10) et le dispositif de retenue (5).

57. Dispositif de réglage selon l'une quelconque des revendications 53 à 56, **caractérisé en ce qu'**un élément de logement (91) dans lequel sont logés en position l'élément de rappel (134) et l'élément de réglage (135) est entouré au moins par segments par un élément de réglage (135) réglable dans l'axe parallèle à l'axe médian longitudinal (26) de l'élément tendeur (24).

58. Dispositif de réglage selon la revendication 57, **caractérisé en ce que** l'élément de réglage (135) a une forme en U.

59. Dispositif de réglage selon la revendication 58, **caractérisé en ce que** l'élément de réglage (135) comporte sur une base (142) un évidement polygonal (137) traversé par l'élément tendeur (24) pour le logement en position immobilisée contre la torsion de l'élément tendeur (24) et **en ce que** les arêtes frontales des montants en saillie (143) dirigées vers le tube de protection (10) ou le dispositif de retenue (5) sont munies d'éléments d'engrenages (144).

60. Dispositif de réglage selon l'une quelconque des revendications 58 ou 59, **caractérisé en ce que** l'élément de réglage (135) est formé par une pièce découpée et/ou estampée et/ou pliée ou par une pièce frittée.

61. Dispositif de réglage selon l'une quelconque des revendications 58 à 60, **caractérisé en ce qu'**un diamètre intérieur minimal entre les montants opposés (143) de l'élément de réglage (135) est au moins légèrement supérieur à une largeur maximale (93) de l'élément de logement (91).

62. Dispositif de réglage selon l'une quelconque des revendications 53 à 61, **caractérisé en ce que** l'élément de réglage (135) est disposé entre les bras de support opposés (95) et une longueur d'élément de réglage (145) est au moins légèrement inférieure à un diamètre intérieur minimal (139) entre bras de support (95).

63. Dispositif de réglage selon l'une quelconque des revendications 53 à 56, **caractérisé en ce que** l'élément de guidage (64) est disposé de manière réglable entre deux faces d'appui (72; 152) placées à distance l'une de l'autre d'un creux (22, 55) et **en ce que**, dans la zone d'au moins une position de fin de course du creux (22, 55), il est prévu au moins un dispositif de déformation déformable plastiquement disposé après celui-ci avec au moins une pièce de déformation (158) pour l'absorption des énergies de choc générées dans le cas d'une collision du véhicule.

64. Dispositif de réglage selon la revendication 53, **caractérisé en ce que** la première partie (42) formant un tube de protection (10) comporte plusieurs parties de tube de protection (45) raccordées les unes aux autres de manière indétachable dont la première partie de tube de protection (45) entourant l'autre partie de tube de protection (45) au moins par segments est polygonale et l'autre partie de tube de protection (45) est circulaire.

65. Dispositif de réglage selon les revendications 63 et 64, **caractérisé en ce que** la première partie de tube de protection (45) est équipée du creux (55) délimité par les faces d'appui (72) et l'autre partie de tube de protection (45) est équipée d'éclisses (151) disposées dans la zone de ce creux (55) à distance les unes des autres dans la direction de son étendue longitudinale et faisant saillie au-dessus d'une face extérieure.

66. Dispositif de réglage selon la revendication 53 ou 65, **caractérisé en ce que** l'élément de guidage (64) est disposé entre les deux parties de tube de protection (45) et entre les éclisses (151).

67. Dispositif de réglage selon l'une quelconque des revendications 53 à 66, **caractérisé en ce qu'**une course de réglage maximale (76) de l'élément de guidage (64) guidé dans deux directions spatiales est limitée par les faces d'appui (72) du creux (22, 55) et/ou les faces d'appui (152) des éclisses (151).

68. Dispositif de réglage selon la revendication 63, **caractérisé en ce qu'**une position libre (160) ayant une largeur (159) supérieure à la largeur (21, 56) du creux (22, 55), qui est divisée en deux zones séparées l'une de l'autre par la pièce de déformation (158) en forme de bande s'étendant perpendiculairement au creux (22, 55), est disposée directement dans la position de fin de course du creux (22, 55).

69. Dispositif de réglage selon la revendication 68, **caractérisé en ce qu'**une longueur de la pièce de déformation (158) est au moins égale ou supérieure à la largeur (159) de la position libre (160) et/ou **en ce qu'**une épaisseur (161) de la pièce de déformation (158) est différente dans la direction de son extension longitudinale.
